# EUROPÄISCHE PATENTSCHRIFT

(11) **EP 1 581 360 B1**
(45) Veröffentlichungstag und Bekanntmachung des Hinweises auf die Patenterteilung: **04.08.2010**
(21) Anmeldenummer: 03782316.8
(22) Anmeldetag: 05.12.2003
(51) Int. Cl.: B23K 20/04, B23K 20/233

(54) **VERFAHREN ZUM HERSTELLEN EINES BANDES MIT EINEM IN DESSEN LÄNGSRICHTUNG VERLAUFENDEN STUFENPROFIL**
METHOD FOR THE PRODUCTION OF A STRIP COMPRISING A STAGGERED PROFILE THAT RUNS IN THE LONGITUDINAL DIRECTION THEREOF
PROCEDE POUR PRODUIRE UN FEUILLARD A PROFIL EN GRADINS DANS LE SENS LONGITUDINAL DU FEUILLARD

(30) Priorität: 06.12.2002 DE 10258824
(43) Veröffentlichungstag der Anmeldung: 05.10.2005
(73) Patentinhaber: HJB Rolling Mill Technology GmbH, 75417 Mühlacker (DE)
(72) Erfinder: BAUDER, Hans-Jörg, 75417 Mühlacker (DE)
(74) Vertreter: Twelmeier Mommer & Partner
(86) Internationale Anmeldenummer: PCT/EP2003/013786
(87) Internationale Veröffentlichungsnummer: WO 2004/052584

(56) Entgegenhaltungen:
- DE-A- 1 527 534
- DE-A- 2 937 317
- PATENT ABSTRACTS OF JAPAN vol. 010, no. 267 (M-516), 11. September 1986 (1986-09-11) & JP 61 092790 A (MITSUBISHI HEAVY IND LTD), 10. Mai 1986 (1986-05-10)
- PATENT ABSTRACTS OF JAPAN vol. 1999, no. 08, 30. Juni 1999 (1999-06-30) & JP 11 077336 A (KAWAI MUSICAL INSTR MFG CO LTD), 23. März 1999 (1999-03-23)
- PATENT ABSTRACTS OF JAPAN vol. 010, no. 142 (M-481), 24. Mai 1986 (1986-05-24) & JP 61 001487 A (HITACHI ZOSEN KK), 7. Januar 1986 (1986-01-07)

## Beschreibung

Die Erfindung betrifft Verfahren zum Herstellen eines Bandes, welches eine durch seine zwei Längsränder bestimmte Breite hat, aus mindestens einem ersten metallischen oder überwiegend metallischen Werkstoff zusammengesetzt ist und der Bereich des Bandes, über den sich der erste Werkstoff erstreckt, eine Grenzfläche aufweist, welche im Querschnitt des Bandes stufenförmig zwischen den beiden Längsrändern des Bandes verläuft, nach dem Oberbegriff des Patentanspruchs 1. Solche Bänder sind zum Beispiel als Bimetallbänder bekannt, bei welchen sich in einem Trägerband aus einem ersten Metall eine längsverlaufende Nut befindet, welche durch einen Streifen aus einem zweiten Metall ausgefüllt ist. In einem solchen Fall spricht man von einer Streifen-Plattierung oder einer Inlay-Plattierung. Bekannt sind auch Bimetallbänder, bei welchen ein Trägerband aus einem ersten Metall entlang einem seiner Längsränder abgestuft ausgebildet ist und die Stufe mit einem Streifen aus einem zweiten Metall aufgefüllt worden ist. In diesem Fall spricht man von einer Stirnkanten-Plattierung. Es sind auch Bänder bekannt, welche sowohl eine Inlay-Plattierung als auch eine Stimkanten-Plattierung aufweisen. Es ist bekannt, solche plattierte Bänder dadurch herzustellen, dass man von einem Trägerband ausgeht, welches einen flachen, rechteckigen Querschnitt aufweist, dass man in dieses Trägerband durch spanende Bearbeitung (Fräsen, Schälen oder Schaben, wobei das Fräsen bevorzugt ist) die benötigte Anzahl von Nuten und/oder Stufen bildet und das durch die spanende Bearbeitung entfernte Material ersetzt durch eine entsprechende Anzahl von Streifen aus einem oder mehreren anderen Metallen oder Legierungen. Die Verbindung des Trägerbandes mit den eingelegten Streifen erfolgt dabei durch Kaltwalzplattieren oder durch Warmwalzplattieren, wobei die Länge des Bandes entsprechend der gewählten Stichabnahme beim Walzen zunimmt.

Maßabweichungen im Bereich einer Inlay-Plattierung und einer Stirnkanten-Plattierung werden dabei im wesentlichen durch die Maßabweichungen bestimmt, die sich aus der spanenden Bearbeitung ergeben. Maßabweichungen, die sich aus der spanenden Bearbeitung ergeben, findet man in gleicher Größenordnung im walzplattierten Band wieder. Entsprechendes gilt, wenn Bänder hergestellt werden, die eine oder mehrere längsverlaufende Nuten oder Abstufungen haben, die nicht durch Walzplattieren mit einem anderen Metall wieder aufgefüllt werden.

Ein besonderes Problem stellen die Maßabweichungen bei einem bandförmigen Halbzeug für elektrische Messwiderstände dar. Es ist bekannt, ein solches bandförmiges Halbzeug dadurch herzustellen, dass man auf zwei parallel zueinander mit Abstand nebeneinander angeordnete Bänder aus Kupfer ein Band aus einem Widerstandsmaterial, zum Beispiel aus der Legierung Manganin, legt, so dass es den Zwischenraum zwischen den beiden Kupferbändern überdrückt. Die so angeordneten Bänder werden dann durch Rollnahtschweißen oder durch Elektronenstrahlschweißen miteinander verbunden. Abgesehen davon, dass ein solches Herstellverfahren verhältnismäßig aufwendig ist, kommt es durch Schwankungen im Abstand der Kupferbänder und durch Schwankungen im Ausmaß und in der Güte der Schweißverbindungen zu unerwünschten Streuungen des Widerstandes von Messwiderständen, die durch Stanzen aus dem bandförmigen Halbzeug gebildet werden. Weiterhin ist bei dieser Vorgehensweise unerwünscht, dass die Messwiderstände auf der Seite, auf welcher das Manganinband auf die Kupferbänder aufgeschweißt ist, vom Manganin zum Kupfer eine Stufe aufweisen. Eine solche Stufe könnte man dadurch vermeiden, dass man in den beiden Kupferbändern entlang einem ihrer Ränder durch Fräsen eine Stufe bildet, deren Höhe mit der Dicke des Manganinbandes übereinstimmt und welche durch Einlegen des Manganinbands anschließend wieder aufgefüllt wird. Das auf die beiden Stufen der Kupferbänder aufgelegte Manganinband kann mit diesen dann durch Rollnahtschweißen oder durch Elektronenstrahlschweißen verbunden werden. Die unerwünschte Stufe zwischen der Manganinoberfläche und der Kupferoberfläche wäre damit beseitigt, allerdings um den hohen Preis von zwei Fräsvorgängen und ohne Verringerung der Streuung der Widerstandswerte.

Aus der JP 550 400 11 A ist es bekannt, zum Erzeugen von Blechen mit Rillen Drähte aus einem harten Material auf eine Platte eines weicheren Materials zu legen und anschließend zu walzen. Auf diese Art und Weise prägen sich die Drähte in das Blech ein und können anschließend entfernt werden.

Aus der JP 61017308 A ist es bekannt, zwei Metallbänder aufeinander zu legen und durch Walzen miteinander zu verbinden.

Aus der GB 2 237 227 A ist ein Verfahren bekannt, bei welchem mehrere Metallplatten übereinander gelegt, durch einen Walzschritt verformt und anschließend separiert aufgewickelt werden.

Die DE 29 37 317 A1 offenbart ein Verfahren, entsprechend dem Oberbegriff des Anspruchs 1, zur Herstellung einer mit einem Streifenmuster versehenen Metallplatte. Zu diesem Zweck werden zunächst eine Anzahl von Blechen, welche in Länge und Breite übereinstimmen, aber sich in ihrer Farbe unterscheiden, aufeinandergeschichtet und mechanisch oder metallurgisch miteinander so verbunden, dass sich ein Schichtkörper ergibt. Dieser wird dann in Scheiben mit rechteckigem Querschnitt geschnitten, wobei der Schneidvorgang quer zu den Schichten erfolgt. Dadurch entstehen Scheiben, deren geschnittene Seiten das gewünschte Streifenmuster aufweisen. Eine solche Scheibe wird durch Kaltwalzen auf eine vorbestimmte Dicke gebracht, insbesondere durch Aufwalzen auf eine gleich große, im Querschnitt rechteckige Grundplatte. Das Ergebnis des Walzvorgangs ist eine Platte mit rechteckigem Querschnitt, welche auf ihrer einen Seite das Streifenmuster aufweist.

Aufgabe der Erfindung ist es, einen Weg aufzuzeigen, wie Bänder bzw. bandförmige Halbzeuge der vorstehend genannten Art genauer, aber möglichst nicht teurer als bisher hergestellt werden können.

Diese Aufgabe wird gelöst durch ein Verfahren mit den im Anspruch 1 angegebenen Merkmalen und durch ein Verfahren mit den im Patentanspruch 44 angegebenen Merkmalen. Vorteilhafte Weiterbildungen der Erfindung sind Gegenstand der Unteransprüche.

Im Rahmen der Erfindung werden als metallische Werkstoffe reine Metalle, Legierungen und metallische Gemenge verstanden; unter überwiegend metallischen Werkstoffen werden Werkstoffe verstanden, die zu mehr als 50 Gewichtsprozent aus einem oder mehreren Metallen bestehen und im übrigen aus einem oder mehreren Nichtmetallen und/oder chemischen Verbindungen bestehen, insbesondere aus Metalloxiden wie zum Beispiel Zinnoxid oder Kupferoxid, aus Metallnitriden, Metallcarbiden oder Metalloiden wie zum Beispiel Kohlenstoff oder Graphit.

Unter Bändern mit rechteckigem Querschnitt werden Bänder verstanden, bei denen die Oberseite und die Unterseite parallel zueinander verlaufen, so dass die Oberseite und die Unterseite im Querschnitt durch zueinander parallele, gleich lange Geraden dargestellt werden, wobei die Flanken, welche Oberseite und Unterseite eines Bandes verbinden, vorwiegend Schnittkanten oder durch Strangpressen gebildete Kanten sind, welche durch nachfolgende Walzvorgänge in ihrer Höhe reduziert sein können und in Abhängigkeit von den vorausgegangenen Fertigungsschritten fertigungstypische Unregelmäßigkeiten aufweisen können, so dass das Band fertigungstypische Abweichungen von der idealen rechteckigen Querschnittsgestalt hat.

Bei der genannten "stufenförmigen" Grenzfläche kann es sich um eine Grenzfläche handeln, welche wie bei einer Stirnkantenplattierung eine oder mehrere treppenförmige Stufen aufweist, wobei die Stufen nicht notwendigerweise rechtwinklig ausgebildet sein müssen, sondern auch stumpfwinklig oder spitzwinklig und sogar hinterschnitten ausgebildet sein können. Zur Bildung einer spitzwinkligen oder stumpfwinkligen Stufe verwendet man dementsprechend Bänder mit einer spitzwinklig oder stumpfwinklig verlaufenden Flanke, welche zum Beispiel durch Strangpressen hergestellt werden können, wenn das Mundstück der Strangpresse einen dementsprechenden Mündungsquerschnitt mit einer oder zwei geneigten Flanken hat. Eine oder mehrere stufenförmige Grenzflächen gibt es somit nicht nur in Bändern mit einem Stufenprofil, sondern auch in genuteten Bändern sowie in Hohlprofilbändem.

Die Erfindung hat wesentliche Vorteile:
◆ Bänder, bei denen ein erster Werkstoff eine Grenzfläche aufweist, welche im Querschnitt des Bandes stufenförmig zwischen den beiden Längsrändern des Bandes verläuft, bedürfen zu ihrer Herstellung weder einer Bearbeitung durch Fräsen oder einer anderen spanenden Bearbeitung noch müssen sie einem Rollnahtschweißen oder Elektronenstrahlschweißen oder einem anderen Schweiß- oder Lötverfahren unterzogen werden. Erfindungsgemäße Bänder können vielmehr allein durch einen Walzvorgang, vorzugsweise ergänzt durch eine Wärmebehandlung, hergestellt werden.
◆ Dadurch, dass keine spanende Bearbeitung erforderlich ist und auch Schweiß- und Lötvorgänge entbehrlich sind, gestaltet sich das erfindungsgemäße Verfahren außerordentlich kostengünstig.
◆ Dadurch, dass erfindungsgemäße Bänder ausschließlich durch Walzen, gegebenenfalls ergänzt um eine Wärmebehandlung, hergestellt werden können, sind Maßabweichungen erreichbar, die ungefähr um einen Faktor 10 kleiner sind als die bisher im Stand der Technik erreichbaren Maßabweichungen.
◆ Es lassen sich Bänder mit hoher Oberflächengüte herstellen. Es wurden bereits Rauhtiefen erreicht, die kleiner sind als Rₐ = 0,02, wohingegen durch Fräsen allenfalls Rauhtiefen von Rₐ = 0,2 erreicht werden.
◆ Wegen der höheren Qualität wird praktisch kein Ausschuß hergestellt.
◆ Die geringeren Maßabweichungen werden aber nicht durch einen höheren Fertigungsaufwand erkauft, sondern gehen sogar mit einem geringeren Fertigungsaufwand einher.
◆ Gefügeunterbrechungen, die durch Fräsen und andere spanende Bearbeitung auftreten, werden erfindungsgemäß vermieden.
◆ Anders als beim Verbinden von Bändern durch Rollnahtschweißen oder Elektronenstrahlschweißen erfolgt die Verbindung beim Walzplattieren vollflächig.
◆ Der Energieverbrauch ist kleiner als im Stand der Technik.
◆ Durch den Wegfall einer spanenden Bearbeitung fallen keine Späne und Öle an, die aufgearbeitet werden müssen. Damit ist die Erfindung umweltfreundlicher als der Stand der Technik.
◆ Nach dem erfindungsgemäßen Verfahren lassen sich außerordentlich vielgestaltige Bänder und bandförmige Halbzeuge aus einem oder mehreren verschiedenen Werkstoffen herstellen:

Ein Band zum Beispiel mit einer streifenförmigen Einlageplattierung kann ausgehend von vier einzelnen, im Querschnitt rechteckigen Bändern hergestellt werden, von welchen ein erstes Band aus einem ersten Werkstoff die Breite des herzustellenden Bandes hat, wohingegen ein zweites Band aus dem ersten Werkstoff, ein drittes Band aus dem ersten Werkstoff und ein viertes Band aus einem zweiten Werkstoff zusammengenommen die Breite des herzustellenden Bandes haben. Das zweite Band, das dritte Band und das vierte Band sind gleich dick und werden mit dem ersten Band so zusammengeführt, dass im Walzspalt oder kurz vor dem Walzspalt, welcher zwischen zwei Arbeitswalzen gebildet ist, die Bestandteil eines Walzgerüstes sind, die drei Bänder nebeneinander auf dem ersten Band liegen und dieses vollständig abdecken und das aus dem zweiten Werkstoff bestehende vierte Band zwischen dem zweiten und dem dritten Band angeordnet ist. Auf diese Weise wird dem Walzspalt eine "zweite Bänderanordnung" zugeführt, in welcher die vier Bänder gemeinsam einen rechteckigen Querschnitt ausfüllen, dessen Breite mit der Breite des herzustellenden Bandes übereinstimmt und dessen Höhe größer ist als die des herzustellenden Bandes. Diese zweite Bänderanordnung verhält sich, wenn die sie bildenden Bänder den rechteckigen Querschnitt der zweiten Bänderanordnung lückenlos ausfüllen, beim Walzen hinsichtlich der Abnahme ihrer Dicke (Stichabnahme) wie ein einheitliches Band. Die Breite der einzelnen Bänder bleibt erhalten, aber ihre Dicke wird entsprechend der gewählten Stichabnahme reduziert. Die Stichabnahme wählt man in Abhängigkeit von den miteinander zu verbindenden Werkstoffen so, dass sich durch das Walzen eine hinreichend feste Verbindung zwischen jenen Bändern ergibt, welche aufeinander plattiert werden sollen. Welche Stichabnahme im Einzelfall vorgesehen wird, kann ein Fachmann auf dem Gebiet des Walzplattierens aus seinem Fachwissen heraus festlegen. In vielen Fällen wird eine Stichabnahme zwischen 50 % und 70 % zum Erfolg führen. Bei einer Stichabnahme von zum Beispiel 66,6 % ist demnach von Bändern auszugehen, die zu einer "zweiten Bänderanordnung" zusammengelegt werden, welche im Querschnitt rechteckig ist, eine mit der Breite des herzustellenden Bandes übereinstimmende Breite und eine Höhe hat, die das dreifache der Höhe des herzustellenden Bandes beträgt. Dabei ist die Höhe des zweiten, dritten und vierten Bandes so zu wählen, dass sie das dreifache der Dicke des Streifens aus dem zweiten Werkstoff beträgt, den dieser Streifen nach dem Plattiervorgang in dem plattierten Band haben soll.

Da genau vorhersehbar ist, wie sich die Maße der zweiten Bänderanordnung beim Walzvorgang verändern, können die Breite und die Höhe der einzelnen Bänder, welche zur Bildung der zweiten Bänderanordnung zusammengeführt werden, zur Bildung eines plattierten Bandes mit vorgegebenen Abmessungen eindeutig vorbestimmt werden.

Soweit sich zwei Bänder, welche aufeinander plattiert werden sollen, aufgrund der Werkstoffauswahl nicht oder nicht gut aufeinander plattieren lassen, besteht die Möglichkeit, eine die Bindung verbessernde oder überhaupt erst vermittelnde Zwischenschicht vorzusehen. Das gilt insbesondere für Bänder, weiche aus dem gleichen Werkstoff gebildet sind, denn Bänder aus gleichen Werkstoffen verbinden sich beim Walzen nicht oder nur schlecht miteinander. In diesen Fällen ist eine Zwischenschicht aus einem anderen Material, welche sich mit dem gewählten Werkstoff gut verbindet, nützlich. So können zum Beispiel zwei Kupferbänder mit Hilfe einer Zwischenschicht aus Silber durch Walzplattieren gut miteinander verbunden werden. Die Zwischenschicht könnte als dünnes Band zwischen zwei aus demselben Werkstoff bestehende Bänder eingeführt werden. Da die Zwischenschicht aber nur sehr dünn zu sein braucht - es genügen einige wenige µm Dicke - ist es jedoch bevorzugt, eines der beiden aus demselben Werkstoff bestehenden Bänder, welche durch Walzplattieren miteinander verbunden werden sollen, dadurch für den Plattiervorgang vorzubereiten, dass die aus einem anderen Metall bestehende Zwischenschicht auf dieses Band durch eines der bekannten physikalischen oder chemischen Abscheideverfahren abgeschieden wird, insbesondere durch ein galvanisches Abscheideverfahren, Durch die Stichabnahme beim Walzplattieren wird die Dicke der Zwischenschicht entsprechend reduziert.

Das durch Walzplattieren hergestellte Band wird vorzugsweise noch einer Wärmebehandlung unterzogen, um die Festigkeit der Plattierverbindungen durch Diffusionsvorgänge zu erhöhen. Infolge einer solchen Wärmebehandlung (Diffusionsglühung) diffundiert das Metall der Zwischenschicht in die angrenzenden Bänder und wird danach im Schliffbild im allgemeinen nicht mehr als Zwischenschicht sichtbar sein. Wird die Zwischenschicht von vorneherein nicht dicker gewählt, als es nötig ist, um ihre Aufgabe zu erfüllen, eine hinreichende Bindung zu erzielen, dann führt die Zwischenschicht auch nicht zu einer möglicherweise unerwünschten Änderung der Werkstoffeigenschaft der beiden Bänder, die mit ihrer Hilfe aufeinander plattiert werden.

Ein Band, zum Beispiel aus Kupfer mit einer streifenförmigen Einlageplattierung, zum Beispiel aus Silber, kann also dadurch hergestellt werden, dass man ein Kupferband, welches die Breite des herzustellenden Bandes hat, mit einem zweiten Kupferband, einem dritten Kupferband und einem vierten Band aus Silber, welche zusammengenommen so breit sind, wie das erste Kupferband und welche untereinander gleich dick sind und von denen das zweite und das dritte Kupferband zuvor einseitig galvanisch mit Silber in einer Schichtdicke von 2 µm bis 4 µm beschichtet wurden, zur Bildung der "zweiten Bänderanordnung" zusammenführt und walzt. Die Kupferbänder verbinden sich mittels der abgeschiedenen Silberschicht miteinander. Das Silberband und das erste Kupferband verbinden sich unmittelbar miteinander. In einer solchen "zweiten Bänderanordnung" bilden die drei Kupferbänder die im Patentanspruch 1 angegebene "erste Bänderanordnung", in welcher das Kupfer im Querschnitt der Bänderanordnung zwischen deren äußeren Längsrändern eine stufenförmig verlaufende Grenzfläche hat, nämlich an den beiden einander zugewandten Schmalseiten (Flanken) des zweiten und dritten Kupferbandes.

Bei der Ausführung des erfindungsgemäßen Verfahrens ist es nicht erforderlich, das zunächst die Bänder der ersten Bänderanordnung zusammengeführt werden und erst dann die weiteren Bänder zugeführt werden, die die erste Bänderanordnung zur im Querschnitt rechteckigen zweiten Bänderanordnung ergänzen. Entscheidend ist lediglich, dass in den Walzspalt der Arbeitswalzen, welche den Walzplattiervorgang ausführen, eine im Querschnitt rechteckige zweite Bänderanordnung eingeführt wird. In welcher zeitlichen Reihenfolge die einzelnen Bänder, welche die zweite Bänderanordnung bilden, zusammengeführt werden, bevor sie in den Walzspalt gelangen, ist unerheblich. Bevorzugt ist es, sie gleichzeitig zusammenzuführen, denn das verspricht den geringsten apparativen Aufwand.

Ein Band mit einer Stirnkantenplattierung kann aus drei einzelnen Bändern hergestellt werden, nämlich aus einem im Querschnitt rechteckigen Band aus einem ersten Werkstoff, welches die Breite des herzustellenden plattierten Bandes hat, aus einem zweiten Band aus dem ersten Werkstoff und aus einem dritten Band aus einem zweiten Werkstoff, wobei das zweite Band und das dritte Band gleich dick sind und zusammengenommen so breit sind wie das erste Band. Unter der Annahme, dass sich das dritte Band und das erste Band durch Walzplattieren aufeinander plattieren lassen, das erste Band und das zweite Band aber nicht, beschichtet man das zweite Band vorab galvanisch einseitig mit einem Metall, aus welchem das dritte Band besteht oder welches im Werkstoff des dritten Bandes vorherrscht, aber vom Werkstoff des ersten und des zweiten Bandes verschieden ist. Mit einer solchen Zwischenschicht läßt sich dann auch das zweite Band auf das erste Band plattieren. Die drei Bänder werden zu diesem Zweck zu einer rechteckigen "zweiten Bänderanordnung" zusammengeführt und dann gemeinsam einem Walzvorgang unterzogen, nach welchem sie vollflächig miteinander verschweißt sind. Zum Beispiel auf eine Haspel aufgewickelt können sie danach noch einer Diffusionsglühung unterzogen werden, um den Zusammenhalt des plattierten Bandes zu erhöhen.

In den beiden genannten Beispiel ist das Ergebnis des erfindungsgemäßen Verfahrens ein walzplattiertes Band mit rechteckigem Querschnitt, zu dessen Herstellung anders als im Stand der Technik keinerlei spanende Bearbeitung erforderlich war, obwohl der erste Werkstoff in dem walzplattierten Band zwischen den beiden äußeren Rändern des Bandes eine in Längsrichtung verlaufende stufenförmige Grenzfläche hat, im ersten Beispiel sogar zwei solche stufenförmige Grenzflächen.

Nach dem erfindungsgemäßen Verfahren lassen sich aber nicht nur im Querschnitt rechteckige Bänder erzeugen, sondern auch Bänder, welche ein in Längsrichtung verlaufendes Stufenprofil haben und deshalb im Querschnitt nicht rechteckig sind. Ersetzt man zum Beispiel in den beiden vorstehend genannten Beispielen das Band, welches nicht aus dem ersten Werkstoff besteht, durch ein anderes Band, welches sich durch Walzen praktisch nicht auf den ersten Werkstoff plattieren läßt, so dass es nach dem Walzen auf dem Band aus dem ersten Werkstoff nicht oder allenfalls vergleichsweise schwach haftet, dann kann man dieses andere Band nach dem Walzen von dem plattierten Band wieder entfernen, insbesondere dadurch, dass man es von dem plattierten Band abzieht und auf eine gesonderte Haspel aufwickeit. Da dieses andere Band nach dem Walzvorgang wieder entfernt wird, wird es in diesem Patent nachfolgend auch als "verlorenes Inlay" bezeichnet. Da sich Bänder, die aus demselben Werkstoff bestehen, zumeist nicht durch Walzen fest miteinander verbinden lassen, besteht die Möglichkeit, als verlorenes Inlay ein Band aus dem ersten Werkstoff zu verwenden, wobei eine die Haftung vermittelnde Zwischenschicht zwischen diesem und dem gegenüberliegenden Band aus demselben Werkstoff entfällt. Es ist aber auch möglich, als verlorenes Inlay ein Band aus einem dritten Werkstoff zu nehmen, wenn dieser sich für ein verlorenes Inlay eignet, und es ist sogar bevorzugt, das zu tun, wenn es im Ergebnis preiswerter ist, weil das verlorene Inlay aus dem dritten Werkstoff zum Beispiel billiger herzustellen ist als ein verlorenes Inlay aus dem ersten Werkstoff. Sollte ein Werkstoff, der als verlorenes Inlay infragekommt, verhältnismäßig teuer sein, dann besteht auch die Möglichkeit, als verlorenes Inlay ein plattiertes Band einzusetzen, welches zur Hauptsache aus einem preiswerten Werkstoff besteht, der sich durch Walzplattieren mit dem ersten Werkstoff verbinden ließe und der deshalb dünn mit einer Schicht zum Beispiel aus dem ersten Werkstoff beschichtet ist, der sich nicht durch Walzen fest mit dem ersten Werkstoff verbindet.

Durch Verwendung eines oder mehrerer verlorener Inlays lassen sich mit dem erfindungsgemäßen Verfahren vielgestaltige Bänder herstellen, welche eine oder mehrere längsverlaufende Nuten und/oder Stufen haben, die sonst aufwendig mit einem spanabhebenden Arbeitsverfahren, insbesondere durch Fräsen, hergestellt werden müßten, erfindungsgemäß aber wesentlich preiswerter und genauer allein durch Walzen hergestellt werden können.

Sogar Bänder mit einem in Längsrichtung verlaufenden Hohlprofil dürften sich nach dem erfindungsgemäßen Verfahren herstellen lassen, wozu ein den Hohlraum des Hohlprofils zunächst ausfüllendes verlorenes Inlay nach dem Walzvorgang wieder entfernt wird. Um das verlorene Inlay aus dem gewalzten Band entfernen zu können, wird dieses Band allerdings in nicht zu lange Abschnitte getrennt werden müssen, wobei außer der Möglichkeit des Herausziehens des Inlays aber auch die Möglichkeit besteht, als verlorenes Inlay ein niedrig schmelzendes Band zu verwenden, zum Beispiel ein solches aus Zinn, welches zum Beispiel im Zusammenhang mit einer Diffusionsglühung im schmelzflüssigen Zustand abgezogen werden kann, oder ein verlorenes Inlay aus einem Kunststoff, welcher durch Erhitzen geschmolzen oder pyrolisiert werden kann.

Das Arbeiten mit einem verlorenen Inlay kann nicht nur zum Herstellen von genuteten Bändern, von abgestuften Bändern oder von Hohlprofilbändem eingesetzt werden, die nur aus einem einzigen Werkstoff bestehen, sondern auch zum Herstellen von komplizierter zusammengesetzten Bändern, die aus zwei oder mehr als zwei verschiedenen Werkstoffen bestehen. Ein Beispiel eines solchen aus mehreren Werkstoffen zusammengesetzten Bandes ist das eingangs erwähnte bandförmige Halbzeug für elektrische Messwiderstände, welches aus zwei abgestuften, parallel und mit Abstand nebeneinander verlaufenden Kupferbändern besteht, die durch ein auf den Stufen der beiden Kupferbänder liegendes Manganinband verbunden sind, welches dünner ist als die Kupferbänder, so dass es über diese nicht vorsteht. Während zur Herstellung eines solchen komplizierten bandförmigen Halbzeugs im Stand der Technik auf Fräs- und Schweißvorgänge zurückgegriffen wird, kann es erfindungsgemäß allein durch Walzvorgänge hergestellt werden: Dazu nimmt man zwei gleich dicke, im Querschnitt rechteckige, Kupferbänder, welche man parallel nebeneinander in dem Abstand anordnet, welchen die Kupferbänder im fertigen Halbzeug haben sollen. Ferner nimmt man zwei einseitig versilberte Kupferbänder, welche schmaler sind als die beiden ersten Kupferbänder, und ordnet sie auf diesen so an, dass ihre äußeren Längsränder paarweise genau übereinander liegen. Die Breite der schmaleren Kupferbänder wird so gewählt, dass ihr Abstand bei dieser Anordnung auf den breiteren Kupferbändern gleich der vorgegebenen Breite des Manganinstreifens im fertigen Halbzeug ist. Ferner nimmt man ein Manganinband, welches eben diese gewünschte Breite hat und genauso dick ist wie die beiden schmaleren Kupferbänder, um es zwischen diesen beiden schmaleren Kupferbändern anzuordnen. Diese fünf Bänder bilden die "erste Bänderanordnung" gemäß Patentanspruch 1. Um sie zur "zweiten Bänderanordnung" zu ergänzen, wird zwischen die beiden breiteren Kupferbänder noch ein weiteres Band als verlorenes Inlay eingeführt. Als verlorenes Inlay kann ein Manganinband verwendet werden, aber auch ein billiges Stahlband. Nachdem man alle sechs Bänder zu der "zweiten Bänderanordnung" zusammengeführt hat, wird diese mit einer Stichabnahme von zum Beispiel 60 % bis 65 % auf die Dicke des herstellenden Halbzeuges herabgewalzt, wobei sich die Kupferbänder und das breitere Manganinband miteinander verbinden, wohingegen sich das schmalere Manganinband nicht mit dem breiteren Manganinband verbindet, aber auch nicht mit den zu beiden Seiten angeordneten Kupferbändern, weil die Walzkraft rechtwinklig zur Drehachse der Arbeitswalzen wirkt. Nach dem Verlassen des Walzspaltes kann das schmalere Manganinband deshalb wieder entfernt werden, zum Beispiel abgezogen und aufgewickelt werden. Zurück bleibt ein allein durch Walzvorgänge zusammengefügtes Kupfer-Manganin-Halbzeug mit hochpräzisen Abmessungen, bei welchem das Manganin nicht über die Oberseite des Kupfers vorsteht, sondern in Form einer speziellen Einlageplattierung in Gestalt einer Brücke vorliegt, die nur deshalb durch Walzplattieren hergestellt werden konnte, weil ein verlorenes Inlay verwendet wurde.

Um die Maßgenauigkeit der erfindungsgemäß hergestellten Bänder und ihre Oberflächengüte zu erhöhen, wird es bevorzugt, die Bänder nach dem Walzplattieren noch zu egalisieren, indem sie vor oder nach dem Entfernen des oder der verlorenen Inlays dem Einwirken von Egalisierwalzen ausgesetzt werden. Unter einem Egalisieren wird ein Walzen des Bandes in einem Walzgerüst mit hochkonstantem Walzspalt verstanden, wodurch die Schwankungen der Dicke des Metallbandes unter geringfügiger Stichabnahme vermindert werden. Walzgerüste zum Egalisieren sind aus der DE 25 41 402 C2 bekannt, worauf wegen weiterer Einzelheiten verwiesen wird. Bei einem für Zwecke der Erfindung geeigneten Egalisier-Walzgerüst wird ein hochkonstanter Walzspalt dadurch erreicht, dass an den über die Walzenzapfenlager hinaus nach außen verlängerten Walzenzapfen von zwei Stützwalzen, von denen die eine die untere Egalisierwalze von unten und die andere die obere Egalisierwalze von oben stützt, senkrecht zu den Walzenachsen vom Walzgut weg gerichtete Vorspannkräfte ausgeübt werden, welche lotrecht ausgerichtet sein können und vorzugsweise in einer um den Walzwinkel von der Walzenachsebene abweichenden, durch das einlaufende Band gehende Wirkungslinie wirken. Auf diese Weise wird das Arbeitsspiel der Egalisierwalzen in den Walzenzapfenlagern verringert. Ein Egalisier-Walzgerüst kann zum Zwecke der Erfindung dem Plattier-Walzgerüst nachgeordnet sein, welches die beiden Arbeitswalzen enthält, deren Walzspalt die "zweite Bänderanordnung" zugeführt wird.

Die Arbeitswalzen sind ebenso wie die Egalisierwalzen zweckmäßigerweise zylindrisch.

Das Walzen zum Zwecke des Plattierens kann als Kaltwalzplattieren oder als Warmwalzplattieren durchgeführt werden. Vorzugsweise wird es als Kaltwalzplattieren durchgeführt, soweit nicht eine große Härte der zu plattierenden Bänder ein Warmwalzplattieren geeigneter erscheinen läßt.

Das erfindungsgemäße Verfahren kann mittels herkömmlicher Walzgerüste durchgeführt werden. Das Walzgerüst ist auf seiner Einlaufseite durch Einrichtungen zu ergänzen, welche die einzelnen Bänder zu der "zweiten Bänderanordnung" zusammenführen und in den Walzspalt führen. Auf seiner Auslaufseite ist das Walzgerüst durch eine Einrichtung zum Aufwickeln des plattierten Bandes zu ergänzen, gegebenenfalls außerdem mit Einrichtungen zum Trennen und zum Aufwickeln eines oder mehrerer verlorener Inlays vom walzplattierten Band, wobei ein Egalisierwalzgerüst vor oder nach der Einrichtung zum Trennen etwaiger verlorener Inlays vorgesehen sein kann.

Das walzplattierte und von etwaigen verlorenen Inlays befreite Band kann je nach seiner Bestimmung auf eine Haspel gewickelt oder in Stücke wählbarer Länge zerteilt und dann weiterverarbeitet werden, insbesondere zunächst durch Diffusionsglühen.

Zum Zuführen der einzelnen Bänder verwendet man zweckmäßigerweise mehrere Haspeln, wobei Bänder, die gleich dick sind und nebeneinander in der "zweiten Bänderanordnung" angeordnet werden sollen, auch von einer gemeinsamen Haspel abgewickelt werden können, auf welche sie nebeneinanderliegend aufgewickelt sind. Führungsflächen und/oder Führungsrollen können zwischen den Haspeln und den Arbeitswalzen des Plattierwalzgerüstes angeordnet sein, um die einzelnen Bänder in der gewünschten Weise zu der "zweiten Bänderanordnung" zusammenzuführen.

Das walzplattierte Band kann, zum Beispiel von einer Haspel aufgewickelt, als Coil in einen Wärmebehandlungsofen gelegt werden, um darin einer Diffusionsglühung unterzogen zu werden.

Durch das Walzplattieren der zweiten Bänderanordnung werden Bänder, die nebeneinander liegen und sich entlang ihrer Flanken berühren, an den Flanken in der Regel nicht miteinander verbunden, weil die Walzkraft im rechten Winkel zur Drehachse der Arbeitswalzen ausgeübt wird. Das den Walzspalt verlassende Band kann deshalb Spalte zwischen nebeneinander liegenden Bändern aufweisen, die in der ersten Bänderanordnung unerwünscht sein können. Solche Spalte lassen sich durch die Weiterbildung der Erfindung gemäß Anspruch 27 vermeiden. Wenigstens im Bereich der einander berührenden Flanken werden die Bänder auf eine solche Temperatur erhitzt, bei welcher sich diese Flanken unmittelbar stoffschlüssig miteinander verbinden. Das wird vorzugsweise dadurch begünstigt, dass die zweite Bänderanordnung beim Walzen so geführt wird, dass ihre Bänder im Walzspalt nicht zur Seite hin ausweichen können.

Werden die Bänder nach dem Walzen auf die besagte Temperatur erhitzt, so macht man es sich zu Nutze, dass Bänder beim Walzen in Abhängigkeit von der gewählten Stichabnahme nicht nur länger werden, sondern auch dazu neigen, geringfügig breiter zu werden. Da die Bänder beim Walzen bevorzugt so geführt werden, dass sie im Walzspalt nicht zur Seite hin ausweichen können, bewirkt die beim Walzen auftretende Neigung der Bänder, breiter zu werden, einen zunehmenden Druck der einander berührenden Flanken der Bänder, was zu einer mikroskopisch feinen mechanischen Verzahnung der einander berührenden Flanken miteinander führt.

Werden die Bänder anschließend wenigstens im Bereich der einander berührenden Flanken erhitzt, können sich die Flanken, welche infolge des Walzvorgangs bereits zusammenhängen, stoffschlüssig miteinander verbinden, wenn im Bereich der Flanken eine Temperatur erreicht wird, bei welcher zwischen den aneinanderliegenden Flanken eine flüssige Phase entsteht.

Das hat wesentliche Vorteile:
◆ Durch das Walzen wird ein vorläufiger Zusammenhalt zwischen zwei an den Flanken miteinander zu verbindenden Bändern erzielt, der durch das nachfolgende Erhitzen zu einer dauerhaften Verbindung wird.
◆ Der durch das Walzen bewirkte vorläufige Zusammenhalt der Bänder weist unzählige Berührungspunkte auf, ausgehend von welchen sich beim Erhitzen eine flüssige Phase bildet, welche in kurzer Zeit zu einer stoffschlüssigen Verbindung der Bänder entlang ihrer Flanken führt.
◆ Infolge von unvermeidlichen Unregelmäßigkeiten im Verlauf der Flanken bestehen zwischen diesen, wenn sie aneinander gelegt werden, unvermeidliche Zwischenräume. Diese unvermeidlichen Zwischenräume werden durch den Walzvorgang minimiert.
◆ Die minimalen Zwischenräume zwischen den Flanken können durch eine flüssige Phase von minimalem Volumen gefüllt werden. Das führt im Ergebnis zu einer sehr feinen, schmalen, gleichmäßigen und geradlinig verlaufenden Verbindungsnaht.
◆ Das Verfahren ist besonders vorteilhaft für das Verbinden von Bändern, welche sich in ihrer stofflichen Zusammensetzung unterscheiden. Es kann aber auch für Bänder angewendet werden, welche in ihrer stofflichen Zusammensetzung übereinstimmen.
◆ Der Schritt des Erhitzens und des darauf folgenden Abkühlens kann zugleich ausgenutzt werden, um die Bänder zu vergüten, insbesondere um eine gewünschte Härte einzustellen.

Bänder, deren unterschiedliche stoffliche Zusammensetzung so ist, dass sie, wenn sie miteinander erhitzt werden, eine Legierung bilden, deren Schmelzpunkt niedriger ist als der Schmelzpunkt des einen Bandes und des anderen Bandes, wie zum Beispiel bei der Verbindung eines Bandes aus Silber mit einem Band aus Kupfer, können nach dem erfindungsgemäßen Verfahren unmittelbar miteinander verbunden werden. Bei gleich zusammengesetzten Bändern und bei Bändern, die sich in ihrer stofflichen Zusammensetzung unterscheiden und beim gemeinsamen Erhitzen in ihrer Berührungszone keine niedriger schmelzende flüssige Phase bilden oder sie erst bei einer unvertretbar hohen Temperatur bilden würden, kann in Weiterbildung der Erfindung in der Verbindungszone ein Lot eingesetzt werden, wobei sowohl Hartlote als auch Weichlote infrage kommen. Das Lot kann auf eine oder auf beide der miteinander zu verbindenden Flanken aufgetragen werden. Bei Verwendung einer Lotlegierung, wie zum Beispiel einer Silber-Kupfer-Hartlotlegierung, besteht die Möglichkeit, die eine Legierungskomponente, zum Beispiel das Silber, auf die Flanke des einen Bandes und die andere Legierungskomponente, zum Beispiel das Kupfer, auf die Flanke des anderen Bandes aufzutragen. In diesem Fall findet die Legierungsbildung erst während des Erhitzens statt. Es besteht auch die Möglichkeit, auf die Flanke eines der beiden Bänder ein Metall aufzutragen, welches mit dem Material, aus welchem das andere metallische Band besteht, beim Erhitzen eine Legierung bildet, welche einen niedrigeren Schmelzpunkt als das Material des einen Bandes und das Material des anderen Bandes hat. So genügt es zum Beispiel, beim Verbinden eines Kupferbandes mit einem Manganinband, nur das Manganinband an seiner Flanke mit Silber zu beschichten, welches beim Erhitzen auf wenigstens 780 °C mit dem Kupfer aus dem anliegenden Kupferband ein Silber-Kupfer-Eutektikum bildet.

Dabei ist es von Vorteil, dass wegen der innigen Verzahnung, welche die beiden miteinander zu verbindenden Flanken infolge des Walzens erfahren, nur eine minimale Menge eines Lotes benötigt wird, so dass eine wegen der Verwendung eines Lotes in Betracht zu ziehende Veränderung der Eigenschaften des einen oder des anderen Bandes in den meisten Fällen auf ein vernachlässigbares Maß beschränkt werden kann. So kann zum Beispiel beim Verbinden eines Bandes aus Kupfer mit einem Band aus Manganin auf die Flanke des Manganinbandes eine mit 2 µm bis 3 µm so dünne Silberschicht aufgetragen werden, dass diese praktisch vollständig in der sich beim Erhitzen bildenden Silber-Kupferlegierung aufgeht und eine Diffusion des Silbers in das Manganin so gering bleibt, dass dessen elektrischer Widerstand praktisch unverändert bleibt. Außerdem besteht die Möglichkeit, eine im Einzelfall unerwünschte Diffusion eines Lotbestandteils in eines der Bänder durch eine die Diffusion behindernde Zwischenschicht auf der Flanke des betreffenden Bandes zu verhindern, welche vor dem Lot aufgetragen wird. So kann man einer Diffusion von Silber zum Beispiel durch eine Zwischenschicht aus Nickel wirksam begegnen.

Als Verfahren zum Auftragen eines Lotmetalls eignet sich insbesondere die galvanische Abscheidung, welche preiswert ist, sich selektiv auf die Flanken beschränken läßt, kontinuierlich im Durchlauf durchgeführt werden kann und hinsichtlich ihrer Schichtdicke leicht steuerbar ist. Andere bekannte Abscheideverfahren für Metalle können für Zwecke der Erfindung aber auch angewendet werden, um eine Flanke eines Bandes mit einem Lotmetall zu beschichten. Wenn gewünscht, kann das betreffende Band in demselben Arbeitsgang auf weiteren Flächen beschichtet werden.

Man kann auf unterschiedliche Weise erreichen, dass die Bänder beim Walzen im Walzspalt nicht zur Seite hin ausweichen können. Eine Möglichkeit besteht darin, im Walzgerüst eine erste Arbeitswalze vorzusehen, welche eine in Umfangsrichtung um die Walze herum führende Ausnehmung hat, deren Breite genau auf die Breite der Anordnung der miteinander zu verbindenden Bänder abgestimmt ist. Die seitliche Begrenzung dieser Ausnehmung verhindert ein Ausweichen der Bänder zur Seite hin. Sollen die Bänder auf eine Dicke herabgewalzt werden, welche geringer ist als die Tiefe der Ausnehmung in der ersten Arbeitswalze, dann benötigt die zweite Arbeitswalze der Ausnehmung der ersten Arbeitswalze gegenüberliegend einen an dessen Breite angepassten Kragen, mit welchem die zweite Arbeitswalze in die Ausnehmung der ersten Arbeitswalze eintauchen kann.

Eine andere Möglichkeit besteht darin, bei einem Walzgerüst mit zylindrischen Arbeitswalzen sowohl auf der Einlaufseite des Walzspaltes als auch auf der Auslaufseite des Walzspaltes seitliche Führungselemente vorzusehen, welche auf die beiden äußeren Ränder der Bänder einwirken und in ihrem gegenseitigen Abstand vorzugsweise veränderlich sind. Letzteres ermöglicht nicht nur eine Anpassung an unterschiedlich breite Bänder, sondern auch eine Erhöhung des Drukkes, mit dem die beiden miteinander zu verbindenden Flanken im Walzspalt gegeneinander gedrückt werden, über den Druck hinaus, der sich alleine aus der beim Walzen ergebenden Tendenz zur Verbreiterung der Bänder ergeben würde.

Nach dem Walzen kann man das zusammengesetzte Band, weiches aus der ersten Bänderanordnung entstanden ist, auf eine Haspel aufwickeln, in einen Glühofen, zum Beispiel in einen Glockenofen, überführen und sie in diesem insbesondere unter einer Schutzgasatmosphäre auf eine Temperatur erhitzen, bei welcher zwischen den miteinander zu verbindenden Flanken eine flüssige Phase entsteht. Eine andere Möglichkeit besteht darin, das zusammengesetzte Band nach dem Verlassen des Walzspaltes und bevor es aufgewickelt wird, durch eine Heizzone zu führen, in welcher es im Durchlauf auf die für eine stoffschlüssige Verbindung der Flanken erforderliche Temperatur erhitzt wird. Dazu kann die Länge der Heizzone auf die Geschwindigkeit abgestimmt werden, mit welcher das zusammenhängende Band den Walzspalt verläßt. Durchlauföfen zur Wärmebehandlung von Metallen unter Schutzgas oder Reaktivgas sind Stand der Technik. Sie erlauben es, die Dauer der Wärmebehandlung zu optimieren und das Auftreten der flüssigen Phase auf einen kurzen Zeitraum zu begrenzen, der für das Ausbilden einer festen Verbindung ausreicht, ohne die Bänder selbst unnötig in Mitleidenschaft zu ziehen. An die Heizzone kann sich eine Abkühlzone anschließen, in welcher das zusammengesetzte Band zur Optimierung seiner mechanischen Eigenschaften kontrolliert abgekühlt und sogar abgeschreckt werden kann.

Andere Möglichkeiten, das den Walzspalt verlassende, zusammenhängende Band zu erhitzen, sind die Verwendung einer elektrischen Induktionsspule, welche das zusammenhängende Band induktiv erwärmt oder - bei einem geeigneten elektrischen Widerstand des zusammenhängenden Bandes - das direkte Erwärmen des zusammengesetzten Bandes mittels eines elektrischen Stromflusses durch das Band, indem Elektroden an das Band angelegt werden, mit welchen der elektrische Strom in das Band eingeleitet wird. Die zuletzt angegebene Möglichkeit erlaubt es, den Stromfluß und damit die Wärmeerzeugung besonders auf den Bereich der miteinander zu verbindenden Flanken zu konzentrieren.

Um ein zusammengesetztes Band zu erhalten, welches keinen Verzug aufweist, ist es günstig, während des Walzens auf das den Walzspalt verlassende zusammengesetzte Band einen Zug auszuüben. Der Zug soll jedoch nicht so groß sein, dass er das Band zusätzlich zu der Längung, die es bereits durch das Walzen erfahren hat, noch bleibend dehnt. Deshalb wird vorzugsweise kalt gewalzt. Die Wärmebehandlung des kalt gewalzten Bandes im Durchlauf erlaubt grundsätzlich auch die Möglichkeit, mit einer das zusammengesetzte Band aufwickelnden Haspel Zug auf das Band auszuüben. Der Zug ist jedoch durch die in der Heizzone herabgesetzte Festigkeit des zusammengesetzten Bandes begrenzt, so dass die Verwendung niedrigschmelzender Lote bevorzugt ist. Das Lot L -Ag15P nach DIN 8513, welches bei ca. 645 °C schmilzt, ist ein Beispiel eines solchen niedrigschmelzenden Hartiotes.

Eine Möglichkeit, die Zugkraft herabzusetzen, die man benötigt, um ein verzugfreies Band zu erhalten, besteht darin, das Band nicht kalt, sondern warm zu walzen.

Es gibt weiterhin eine vorteilhafte Möglichkeit, auch bei Temperaturen, die so hoch sind, dass die für ein verzugfreies Band erforderliche Zugkraft hinter der Heizzone, welche sich auf der Auslaufseite des Walzgerüstes befindet, nicht aufgebracht werden kann, dennoch ein verzugfreies Band zu erhalten, indem man nämlich das wenigstens eine zusätzliche Band, welches die "erste Bänderanordnung" zu der "zweiten Bänderanordnung" ergänzt, nach dem Verlassen des Walzspaltes von der ersten Bänderanordnung trennt, auf eine gesonderte Haspel aufwickelt und erst danach die zusammenhängende Bänderanordnung in die Heizzone einführt. Die Haspel, welche das zusätzliche Band aufwickelt, kann nun den Zug aufbringen, der ein verzugfrei gewalztes zusammengesetztes Band ermöglicht.

Werden die Bänder bereits vor dem Walzen auf eine Temperatur erhitzt, bei welcher sich die aneinander berührenden Flanken stoffschlüssig miteinander verbinden, und liegt die Temperatur im Walzspalt bereits wieder tiefer als die Temperatur, bei welcher sich die Flanken unmittelbar stoffschlüssig miteinander verbinden können, dann wird die infolge des Erhitzens bereits erfolgte Verbindung durch den Walzvorgang in Verbindung mit der seitlichen Führung der Bänder weiter verfestigt. Liegt hingegen im Walzspalt noch eine Temperatur vor, bei welcher sich die Flanken stoffschlüssig miteinander verbinden können, dann entsteht durch den heißen Walzvorgang und die sich daran anschließende Abkühlung die gewünschte feste stoffschlüssige Verbindung zwischen den einander berührenden Flanken der Bänder.

In beiden Fällen ist es von Bedeutung, dass die Bänder beim Walzen gemeinsam so geführt werden, dass sie im Walzspalt nicht zur Seite hin ausweichen können. Vorzugsweise werden die Bänder auch schon in der Zone, wo sie erhitzt werden, gemeinsam so geführt, dass sie nicht zur Seite hin ausweichen können.

Vorzugsweise werden die Bänder erst unmittelbar vor dem Walzen erhitzt und heiß gewalzt. Das Erhitzen, Führen und Walzen konzentriert sich dann auf einen kleinen, aber überschaubaren Bereich, der bei Bedarf ohne größeren Aufwand unter Schutzgas gesetzt werden kann.

Zum Herstellen von kompliziert aufgebauten Bändern kann man erfindungsgemäß auch zweistufig vorgehen, indem zunächst ein einfacher strukturiertes Band nach dem erfindungsgemäßen Verfahren hergestellt und dieses dann nochmals in einem erfindungsgemäßen Verfahren mit weiteren Bändern zu einem komplizierter aufgebauten Band verbunden wird.

Ausführungsbeispiele der Erfindung sind in den beigefügten Zeichnungen dargestellt. In den verschiedenen Zeichnungen sind gleiche oder einander entsprechende Teile mit übereinstimmenden Bezugszahlen bezeichnet.
Figur 1 zeigt eine Kaltwalzplattieranlage schematisch in einer Seitenansicht,
Figur 2 zeigt diese Anlage in einer teilweise geschnittenen Draufsicht, wobei der Schnitt entlang der in Figur 1 eingezeichneten Schnittlinie gelegt ist,
Figur 3 zeigt ein erfindungsgemäß hergestelltes zweilagiges Band mit einer Einlageplattierung und mit einer Stirnkantenplattierung,
Figur 4 zeigt im Querschnitt ein Stufenprofilband mit einer längsverlaufenden Nut und mit einer längsverlaufenden Stufe,
Figur 5 zeigt im Querschnitt ein zweilagiges Band, welches als Halbzeug für die in
Figur 6 und Figur 7 in einer Schrägansicht dargestellten Messwiderstände geeignet ist,
Figur 8 zeigt im Querschnitt ein dreilagiges Band zur Herstellung des in
Figur 9 dargestellten Hohlprofilbandes,
Figur 10 zeigt im Querschnitt ein dreilagiges Band, welches gegenüber dem in Figur 8 dargestellten Band dahingehend abgewandelt ist, dass es zusätzlich an einer der Stirnkanten ein verlorenes Inlay enthält, welches zur Bildung des in
Figur 11 dargestellten Bandes entfernt werden kann,
Figur 12 zeigt im Querschnitt ein dreilagiges Band mit drei verlorenen Inlays, zur Herstellung des in Figur 13 dargestellten Stufenprofilbandes,
Figur 14 zeigt im Querschnitt ein dreilagiges Band mit vier verlorenen Inlays zur Herstellung des in
Figur 15 im Querschnitt dargestellten Stufenprofilbandes,
Figur 16 zeigt in einer Darstellung wie in Figur 1 eine abgewandelte Walzplattieranlage,
Figur 17 zeigt die Anlage aus Figur 16 in einer teilweise geschnittenen Draufsicht, wobei der Schnitt entlang der in Figur 16 eingezeichneten Schnittlinie gelegt ist,
Figur 18 zeigt vergrößert als Detail einen Ausschnitt aus Figur 16,
Figur 19 zeigt vergrößert als Detail einen Ausschnitt aus Figur 17,
Figur 20 zeigt zwei für die Anlage gemäß den Figuren 16 bis 19 besonders ausgebildete Arbeitswalzen, und
Figur 21 zeigt in einer der Figuren 18 entsprechenden Darstellung eine Abwandlung der Anlage.

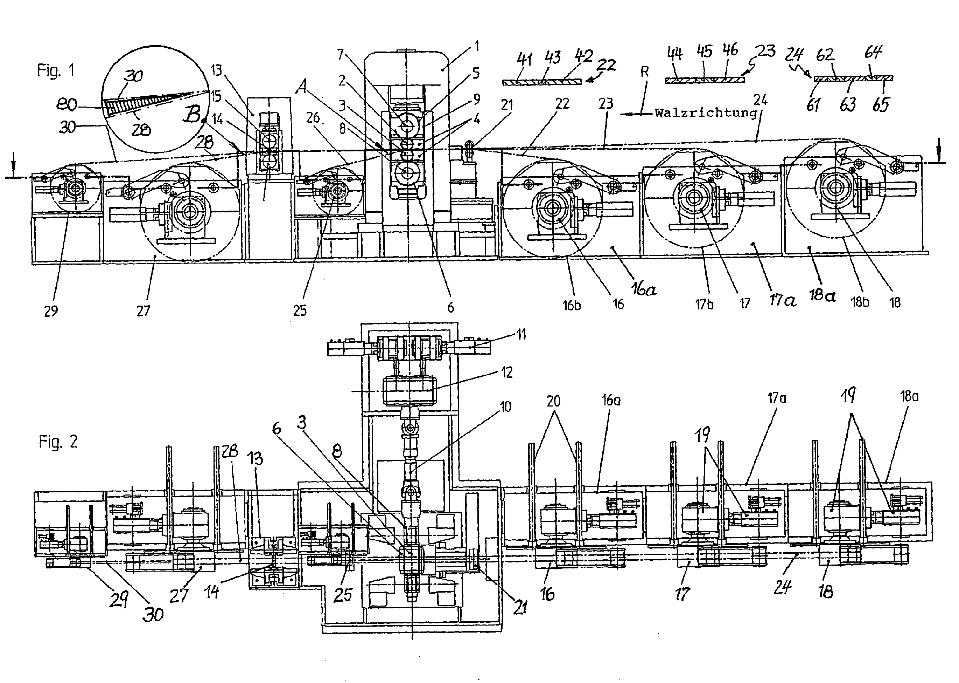

Die Figuren 1 und 2 zeigen ein Walzgerüst 1 mit zwei zylindrischen Arbeitswalzen 2 und 3, welche in Arbeitslagern 4 gelagert und von einer oberen Stützwalze 5 sowie einer unteren Stützwalze 6 gestützt werden, welche mit Walzenzapfen 7 und 8 in Walzenzapfenlagern gelagert sind, welche Ihrerseits in seitlichen Einbauteilen 9 des Walzgerüstes 1 vorgesehen sind. Die obere Arbeitswalze 2 sowie die untere Stützwalze 6 werden mittels Kardanwellen, von denen in Figur 2 nur die Kardanwelle 10 für die untere Stützwalze 6 dargestellt ist, mittels Elektromotoren 11 über ein Getriebe 12 angetrieben. Die anderen beiden Walzen 3 und 5 werden durch Reibung von den angetriebenen Walzen 2 und 6 mitgenommen.

Dem Walzgerüst 1 ist ein Egalisier-Walzgerüst 13 nachgeordnet, dessen Walzspalt auf der selben Höhe liegt wie der Walzspalt des Walzgerüstes 1. Das Egalisierwalzgerüst 13 hat ein Paar Egalisierwalzen 14 und ein Paar Stützwalzen 15, welche wegen der wesentlich kleineren Walzdruckkräfte, die beim Egalisieren auftreten, wesentlich kleiner sein können als die entsprechenden Walzen im Walzgerüst 1.

Die zum Walzen zuzuführenden Bänder befinden sich auf Haspeln 16, 17 und 18, welche hintereinander in einer gemeinsamen Flucht angeordnet sind. Jede dieser Haspeln 16, 17 und 18 hat einen eigenen Ständer 16a, 17a und 18a, in welchem sich für jede der Haspeln ein Antrieb 19 befindet. Jede Haspel hat einen Träger für ein oder mehrere Coils 16b, 17b und 18b. Die Träger und mit ihnen die Coils 16b, 17b und 18b können mit Hilfe von waagerecht geführten Stangen 20 quer zur Walzrichtung R verschoben werden, um die Lage der von den Haspeln 16, 17 und 18 abgezogenen Bänder 22, 23 und 24 zu justieren.

Die drei Haspeln 16, 17 und 18 erlauben es, dem Walzgerüst 1 eine dreischichtige Bänderanordnung zuzuführen, deren drei Lagen von Bändern 22, 23 und 24 kurz vor dem Walzgerüst 1 in einem zwischen zwei Führungsrollen 21 gebildeten waagerechten Spalt zusammenlaufen, welcher in Höhe des Walzspaltes des Walzgerüstes 1 liegt.

Die erste Haspel 16 enthält ein oder mehrere Coils 16b nebeneinander zur Bildung einer ersten, unteren Lage 22 einer "zweiten Bänderanordnung". Die zweite

Haspel 17 dient zur Aufnahme eines oder mehrerer Coils 17b für die Bildung einer zweiten Lage 23 der "zweiten Bänderanordnung". Die dritte Haspel 18 dient zur Aufnahme eines oder mehrerer Coils 18b nebeneinander zur Bildung einer dritten Lage 24 der "zweiten Bänderanordnung". Zur Herstellung einer vierlagigen Bänderanordnung würde man eine weitere Haspel hinzufügen. Für die Bildung einer lediglich zweilagigen Bänderanordnung würde man nur zwei der Haspeln benutzen müssen. Die Anordnung mehrerer Coils auf einer Haspel setzt voraus, dass die Coils im Durchmesser übereinstimmen und die Bänder gleich dick sind.

Zwischen dem Walzgerüst 1 und dem Egalisierwalzgerüst 13 befindet sich eine Aufhaspel 25 für eines oder mehrere Inlaybänder 26, welche aus der unteren Lage der zweiten Bänderanordnung stammen. Hinter dem Egalisierwalzgerüst 13 befindet sich eine Aufhaspel 27 für das herzustellende Band 28. Der Aufhaspel 27 nachgeordnet befindet sich noch eine weitere Aufhaspel 29 für eventuelle weitere verlorene Inlaybänder 30, welche aus der oberen Lage 24 der zweiten Bänderanordnung stammen. Die Aufhaspeln 25, 27 und 29 sind in gleicher Weise gelagert und angetrieben wie die Haspeln 16, 17 und 18, so dass das nicht weiter erläutert werden muß.

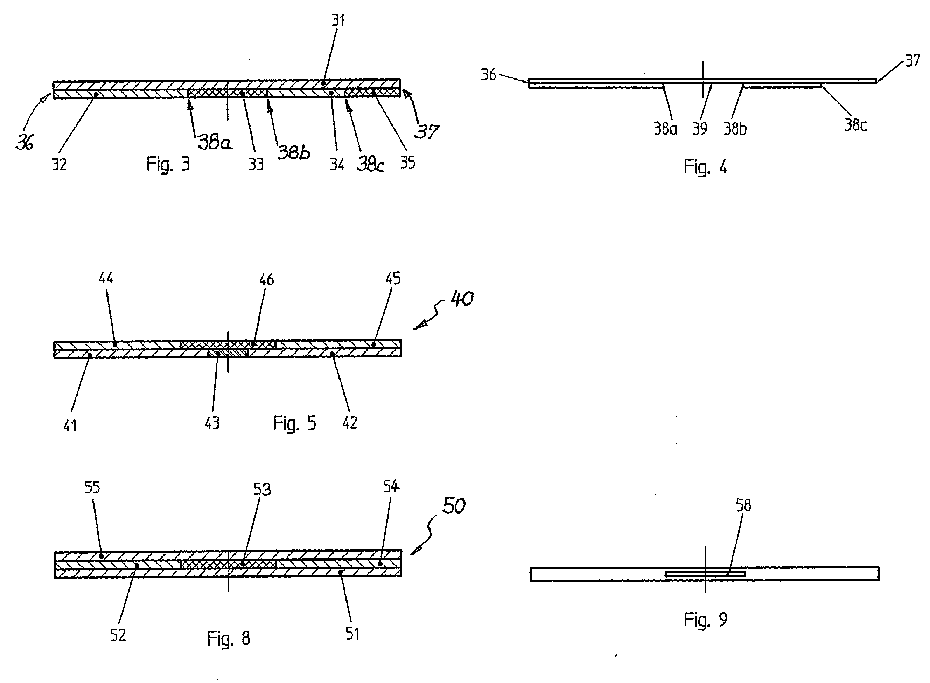

Figur 3 zeigt im Querschnitt eine rechteckige zweilagige "zweite Bänderanordnung", welche aus fünf verschiedenen Bändern zusammengesetzt ist, die durch einen Walzplattiervorgang miteinander verbunden werden: Ein erstes Band 31 aus einem ersten Werkstoff, welches sich über die gesamte Breite des herzustellenden Bandes erstreckt, aus vier untereinander gleich dicke, schmalere Bänder 32, 33, 34 und 35, welche zusammengenommen genauso breit sind, wie das erste Band 31, und von denen das erste, in der Zeichnung links angeordnete Band 32 aus dem ersten Werkstoff besteht, das nächste Band 33 aus einem zweiten Werkstoff, das daran anschließende dritte Band 34 wiederum aus dem ersten Werkstoff und das letzte Band 35 wiederum aus dem zweiten Werkstoff. Bei dem ersten Werkstoff kann es sich zum Beispiel um Kupfer oder eine Kupferlegierung handeln, bei dem zweiten Werkstoff kann es sich zum Beispiel um Silber oder eine Silberlegierung handeln. Damit sich die Bänder 32 und 34 mit dem Band 31 verbinden, sind die Bänder 32 und 34 auf ihrer dem Band 31 zugewandten Seite in einer Schichtdicke von 2 µm bis 4 µm galvanisch mit Silber beschichtet.

Das erste Band 31 kommt von der zweiten Haspel 17, die anderen vier Bänder 32 bis 35 kommen von der ersten Haspel 16, auf welcher sie nebeneinander Coils 16b mit übereinstimmenden Durchmessern bilden. Die fünf Bänder 31 bis 35 werden durch den Spalt zwischen den Führungsrollen 21 hindurch in den Walzspalt des Walzgerüstes 1 eingefädelt, durch ihn hindurchgezogen, dann in den Walzspalt des Egalisierwalzgerüstes 13 eingefädelt, durch dieses hindurchgezogen und dann auf der Aufhaspel 27 festgemacht, welche beim anschließenden Walzvorgang einen definierten Zug auf das Walzgut ausübt.

Im Walzspalt des Walzgerüstes 1 wird die zweite Bänderanordnung, die in Figur 3 dargestellt ist, um eine Stichabnahme in der Dicke reduziert. Die Figur 3 stellt somit, abgesehen von der sich durch den Walzvorgang ändernden Dicke, sowohl die "zweite Bänderanordnung" dar, welche dem Walzspalt des Walzgerüstes 1 zugeführt wird, als auch das sich durch den Walzvorgang ergebend fertige Band. Das gewalzte, sich auf der Haspel 27 befindende Band kann von Zeit zu Zeit als Coil entnommen und zur Diffusionsglühung in einen Wärmebehandlungsofen überführt werden.

In dem in Figur 3 dargestellten Band hat der erste Werkstoff (im Beispiel ist es Kupfer) drei längsverlaufende Grenzflächen 38a, 38b und 38c, welche im Bereich zwischen den Längsrändern 36 und 37 eine Stufe bilden. Bei konventioneller Herstellung hätten diese Stufen spanabhebend, insbesondere durch Fräsen, gebildet werden müssen.

Wandelt man das Beispiel gemäß Figur 3 ab, in dem man als Bänder 33 und 35 keine Silberbänder nimmt, sondern Bänder aus dem ersten Werkstoff, die im Gegensatz zu den Bändern 32 und 34 nicht versilbert sind, dann ergibt sich zwischen den Bändern 33 und 35 auf einer einen Seite und dem ersten Band 31 auf der anderen Seite durch den Walzvorgang keine feste Haftung. Vielmehr können die Bänder 33 und 35 nach dem Verlassen des Walzgerüstes 1 von der "ersten Bänderanordnung", welche aus den Bändern 31, 32 und 34 gebildet ist, getrennt und von der Aufhaspel 25 aufgewickelt werden, wohingegen die aus den Bändern 31, 32 und 34 gebildete "erste Bänderanordnung" zu einem zusammengesetzten Band gewalzt wurde, welches eine längsverlaufende Nut 39 und eine aussenseitliche Stufe 38c hat und auf die Aufhaspel 27 aufgewickelt werden kann, nachdem es das Egalisierwalzwerk 13 durchlaufen hat.

Ein solches in Figur 4 dargestellte Profilband besteht praktisch nur aus dem ersten Werkstoff. Eine als Plattierhilfe eingesetzte dünne Zwischenschicht aus Silber ändert die Eigenschaften des ersten Werkstoffes praktisch nicht; beim anschließenden Diffusionsglühen diffundiert das Silber in den ersten Werkstoff hinein und kann danach im allgemeinen im Schliffbild nicht mehr nachgewiesen werden.

Figur 5 zeigt eine zweilagige Bänderanordnung 40, in welcher die erste Lage mit Abstand nebeneinander zwei Kupferbänder 41 und 42 und dazwischen ein schmaleres Manganinband 43 aufweist, welche sämtlich gleich dick sind. Die zweite Lage weist zwei Kupferbänder 44 und 45 auf, welche schmäler sind, als die Kupferbänder 41 und 42 und dementsprechend einen größeren Abstand voneinander haben, wobei sich zwischen ihnen ein Band 46 aus Manganin befindet. Die Bänder 44, 45 und 46 sind untereinander gleich dick und die Bänder 41, 42 und 43 sind zusammengenommen genauso breit wie die Bänder 44, 45 und 46.

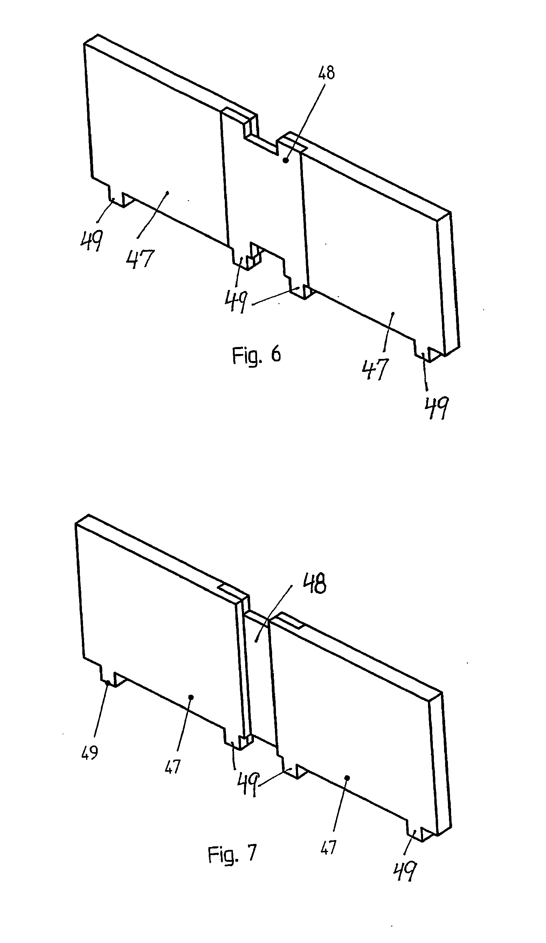

Die Bänder 41, 42 und 43 der ersten Lage kommen von der ersten Haspel 16, die Bänder 44, 45 und 46 der zweiten Lage kommen von der zweiten Haspel 17. In Figur 1 ist für dieses Beispiel oberhalb der Haspel 16 als Detail symbolisch dargestellt, wie die Bänder 41, 42 und 43 der ersten Lage nebeneinander von der Haspel 16 laufen. Entsprechend ist oberhalb der Haspel 17 als Detail dargestellt, wie die Bänder 44, 45 und 46 nebeneinander von der Haspel 17 laufen. Die Bänder 44 und 45 sind auf ihrer Unterseite dünn versilbert. Deswegen verbindet sich beim Walzvorgang das Band 44 mit dem Band 41, das Band 45 mit dem Band 42, das Manganinband 46 mit den Kupferbändern 41 und 42, nicht aber mit dem Manganinband 43; bei letzterem handelt es sich vielmehr um ein verlorenes Inlay. Es wird nach dem Plattierwalzvorgang wieder entfernt und von der Aufhaspel 25 aufgewickelt, während das restliche zusammengesetzte Band von der Aufhaspel 27 aufgewickelt wird. Von diesem zusammengesetzen Band lassen sich durch Trenn- und Stanzvorgänge die in Figur 6 in Schrägansicht von der einen Seite und in Figur 7 in Schrägansicht von der gegenüberliegenden Seite dargestellten Messwiderstände herstellen, die aus zwei Anschlußfahnen 47 aus Kupfer bestehen, die durch eine Brücke 48 aus Manganin verbunden sind und Kontaktbeine 49 haben, welche in dazu passende Steckkontakte gesteckt werden können. Da das Halbzeug für diese Messwiderstände ausschließlich durch Walzvorgänge aus im Querschnitt rechteckigen Bändern hergestellt wird, ohne dass irgendwelche Fräsarbeiten und Schweißvorgänge erforderlich wären, hat das Halbzeug eine so hohe Maßgenauigkeit und Oberflächengüte, dass die Messwiderstände mit einer wesentlich geringeren Streuung der Widerstandswerte erhalten werden als bei einer Herstellung gemäß dem Stand der Technik.

Figur 8 zeigt eine aus drei Lagen gebildete "zweite Bänderanordnung" 50, welche in der ersten Lage aus nur einem Band 51 aus einem ersten Werkstoff besteht, in der zweiten Lage drei gleich dicke Bänder 52, 53 und 54 hat, von denen die Bänder 52 und 54 mit Abstand nebeneinander liegen und aus dem ersten Werkstoff bestehen, während dazwischen das Band 53 als verlorenes Inlay liegt. Die dritte Lage besteht wiederum aus nur einem Band 55, welches mit dem Band 51 der ersten Lage übereinstimmt. Bei dem ersten Werkstoff könnte es sich zum Beispiel um einen Stahl handeln. Damit sich die Bänder 51 und 55 mit den Bändern 52 und 53 verbinden, können die Bänder 52 und 54 in diesem Fall zum Beispiel beidseitig dünn verkupfert sein. Das verlorene Inlay 53 könnte ein unverkupfertes Stahlband sein oder ein Band aus einem niedrig schmelzenden Metall wie Zinn. Nach dem Walzplattieren kann das Inlay 53 abschnittsweise herausgezogen werden, wenn das walzplattierte Band in Abschnitte passender Länge zerschnitten wird. Im Falle eines niedrigschmelzenden Inlays 53 kann dieses durch Wärmebehandlung verflüssigt und ausgetrieben oder abgesaugt werden. Auf diese Weise erhält man ein walzplattiertes Hohlprofilband, welches in Figur 9 dargestellt ist.

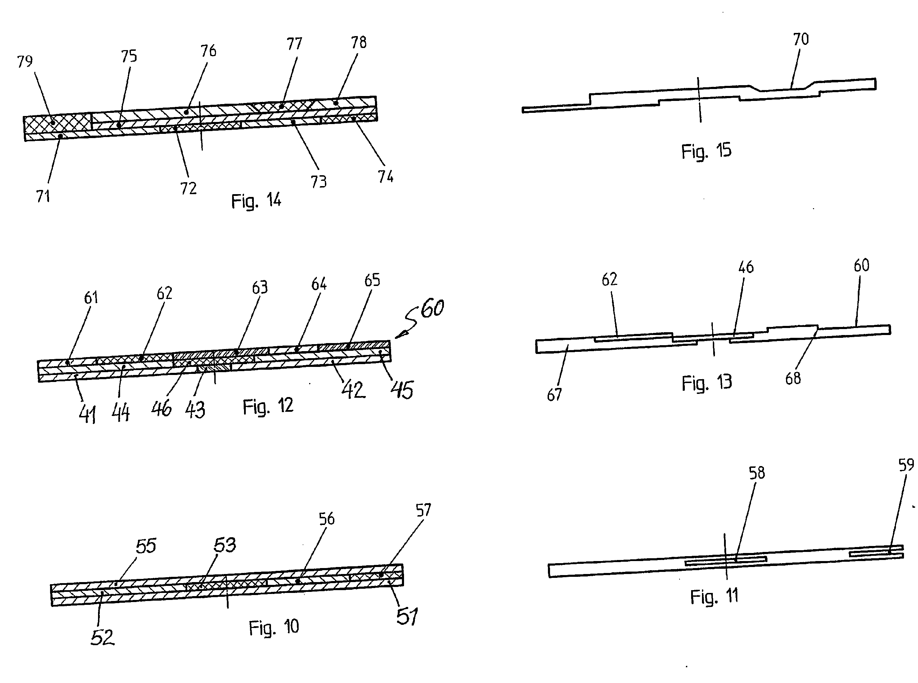

Das in den Figuren 10 und 11 dargestellte Band unterscheidet sich von dem in den Figuren 8 und 9 dargestellten Band darin, dass in der zweiten Lage anstelle des Bandes 54 zwei schmalere Bänder 56 und 57 vorgesehen sind, welche zusammen mit den Bändern 52 und 53 von der Haspel 17 kommen können. Das Band 56 besteht aus dem ersten Werkstoff und ist zum Beispiel beidseitig verkupfert. Das Band 57 besteht aus einem anderen Werkstoff und bildet ein verlorenes Inlay; es besteht zum Beispiel aus einem Stahl, der sich nicht mit dem ersten Werkstoff verbindet. Während das Band 53 für das verlorene Inlay wie zuvor beschrieben entfernt werden kann, kann das Band 57, welches ein seitliches verlorenes Inlay bildet, zur Seite herausgezogen und aufgehaspelt werden. Das Ergebnis ist ein Hohlprofilband, welches aus nur einem Werkstoff besteht und die in Figur 11 dargestellte Querschnittsgestalt hat, welche zusätzlich zu dem Hohlraum 58, in welchem sich das verlorene Inlay 53 befand, noch einen zur Seite hin offenen Schlitz 59 hat, welchen das verlorene Inlay 57 zurückgelassen hat.

Die Figuren 12 und 13 zeigen ein Ausführungsbeispiel, welches von einer zweilagigen Bänderanordnung wie in Figur 5 ausgeht und diese ergänzt um eine dritte Lage, in welcher nebeneinander fünf Bänder 61, 62, 63, 64 und 65 liegen, welche sämtlich die gleiche Dicke haben und von denen, das Band 61 aus dem ersten Werkstoff besteht, aus welchem auch die Bänder 41, 42, 44 und 45 bestehen. Das Band 62 besteht zum Beispiel aus einem Edelmetall, das Band 63 bildet ein verlorenes Inlay, beispielsweise aus einem Stahl. Das Band 64 besteht wie das Band 61 aus dem ersten Werkstoff und das Band 65 bildet wiederum ein verlorenes Inlay aus einem Werkstoff, welcher sich mit dem ersten Werkstoff nicht verbindet. Die fünf Bänder der dritten Lage können von der Haspel 18 kommen, wenn sie darauf Coils von untereinander gleichem Durchmesser bilden. Über der Haspel 18 ist als Detail symbolisch gezeichnet, wie die fünf Bänder 61 bis 65 der dritten Lage nebeneinander von der Haspel 18 laufen. Die Bänder der ersten und zweiten Lage laufen von den Haspeln 16 und 17, wie schon anhand der Figur 5 beschrieben wurde. Die Bänder 61 und 65 sind auf ihrer Unterseite zum Beispiel dünn mit Silber beschichtet, damit sie sich mit den Bändern 44 und 45 verbinden können, wenn die "zweite Bänderanordnung" 60 gemäß Figur 12 durch das Walzgerüst 1 hindurchgeführt wird. Hinter dem Walzgerüst 1 wird zunächst das verlorene Inlay 43 von der zweiten Bänderanordnung 60 getrennt und von der Aufhaspel 25 aufgewickelt. Das verbleibende zusammengesetzte Band durchläuft das Egalisierwalzgerüst 13. Danach werden die verlorenen Inlays 63 und 65 von dem restlichen zusammengesetzten Band getrennt und von der Aufhaspel 29 aufgewickelt, wohingegen das restliche zusammengesetzte Band, welches aus der "ersten Bänderanordnung" gebildet ist und hergestellt werden sollte und in Figur 13 im Querschnitt dargestellt ist, von der Haspel 27 aufgewickelt wird. Dieses restliche Band hat zwei unterschiedliche Stufenprofilbänder 66 und 67 aus dem ersten Werkstoff, von denen das Band 66 mit dem Edelmetallband 62 plattiert und beide Bänder 66 und 67 durch eine Brücke aus dem Band 46 verbunden sind, welches nicht aus dem ersten Werkstoff besteht und auch verschieden von dem Werkstoff des Bandes 62 sein kann. Es ist erstaunlich, dass es möglich war, dieses komplizierte Band ausschließlich durch Walzprozesse aus einzelnen im Querschnitt rechteckigen Bändern herzustellen.

Die Figur 14 illustriert, mit was für einer "zweiten Bänderanordnung" ein Stufenprofilband 70 mit der in Figur 15 dargestellten komplizierten Gestalt hergestellt werden kann. Die "zweite Bänderanordnung" in Figur 14 hat in ihrer ersten Lage vier Bänder mit rechteckigem Querschnitt, welche gleich dick sind, nämlich von links nach rechts ein Band 71 aus einem ersten Werkstoff, ein Band 72, welches ein verlorenes Inlay bildet, ein Band 73 aus dem ersten Werkstoff und ein Band 74, welches ein weiteres verlorenes Inlay bildet. Diese vier Bänder kommen von der ersten Haspel 16. Die zweite Lage besteht aus einem Band 75 aus dem ersten Werkstoff. Dieses Band ist etwas schmäler als die vier Bänder der ersten Lage zusammengenommen. Als dritte Lage liegen auf dem Band 75 drei gleich dicke Bänder 76, 77 und 78, welche zusammengenommen so breit sind wie das Band 75 und von denen das Band 76 und das Band 78 aus dem ersten Werkstoff bestehen, während das Band 77 ein verlorenes Inlay bildet. Das Band 77 hat einen trapezförmigen Querschnitt und kann zum Beispiel durch Strangpressen hergestellt sein. Die Bänder 76 und 78 haben dem Band 77 zugewandte, passende Schrägflächen und können durch einen entsprechend schräg verlaufenden Trennschnitt aus einem im Querschnitt rechteckigen Band gebildet werden. Schließlich ist noch ein Band 79 zur Bildung eines weiteren verlorenen Inlays vorgesehen, welches so dick ist wie die zweite Lage und die dritte Lage zusammengenommen und diese zu einem Rechteckquerschnitt ergänzt. Das Band 75 der zweiten Lage kommt von der Haspel 17, die Bänder der dritten Lage kommen von der Haspel 18. Für das Zuführen des Bandes 79 wird in diesem Fall eine vierte Haspel benötigt.

Hat die in Figur 14 dargestellte "zweite Bänderanordnung" das Walzgerüst 1 durchlaufen, dann werden die Inlays 72 und 74 vom restlichen Band getrennt und von der Aufhaspel 25 aufgewickelt. Das restliche Band durchläuft zunächst das Egalisierwalzgerüst 13. Dahinter werden die Inlays 77 und 79 abgezogen und das Inlay-Band 77 von der Aufhaspel 29 aufgewickelt. Das Inlay-Band 79 wird von einer weiteren, in Figur 1 nicht dargestellten Aufhaspel aufgewickelt. Das verbleibende Stufenprofilband 70 mit dem in Figur 15 dargestellten Querschnitt wird von der Haspel 27 aufgewickelt, von welcher von Zeit zu Zeit ein Coil entnommen und zur Diffusionsglühung in einen Wärmebehandlungsofen überführt werden kann. Die das Stufenprofilband 70 bildende "erste Bänderanordnung" besteht aus den Bändern 71, 73, 75, 76 und 78.

Im Gegensatz zu den vorhergehenden Beispielen hat das in Figur 15 dargestellte Stufenprofilband 70 nicht nur senkrechte Stufen, sondern auch zwei schräge Stufen.

Im allgemeinen genügen die von den Aufhaspeln 25 und 29 ausgeübten Bandzugkräfte, die die jeweiligen Bänder straffen und ziehen, um die verlorenen Inlays abzutrennen und aufzuwickeln. Sollte die Abtrennung der verlorenen Inlays bei der einen oder anderen Materialpaarung nicht ganz so einfach sein, kann sie durch keilförmige Trennkörper unterstützt werden, welche in den Zwickel zwischen den verlorenen Inlays und dem verbleibenden zusammengesetzten Band eingefügt werden, wie es in Figur 1 beispielhaft durch ein vergrößert hervorgehobenen Detail dargestellt ist, welches einen keilförmigen Trennkörper 80 zwischen dem Inlay 26 und dem verbleibenden Band 28 an der in Figur 1 mit A bezeichnete Stelle zeigt. In entsprechender Weise kann man einen keilförmigen Trennkörper an der in Figur 1 mit B bezeichneten Stelle einfügen, um dort das Inlay 26 vom restlichen Band zu trennen.

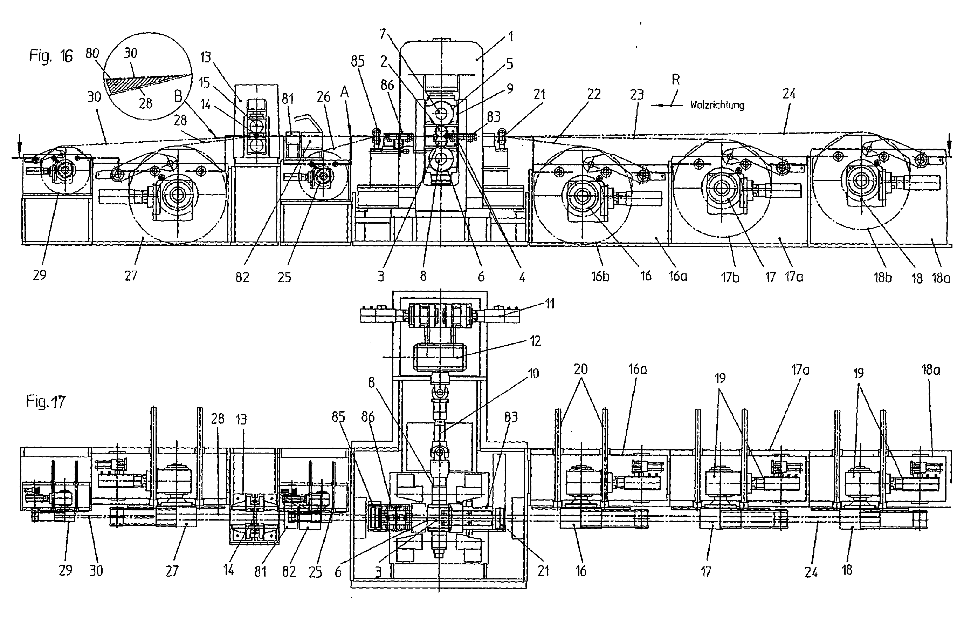

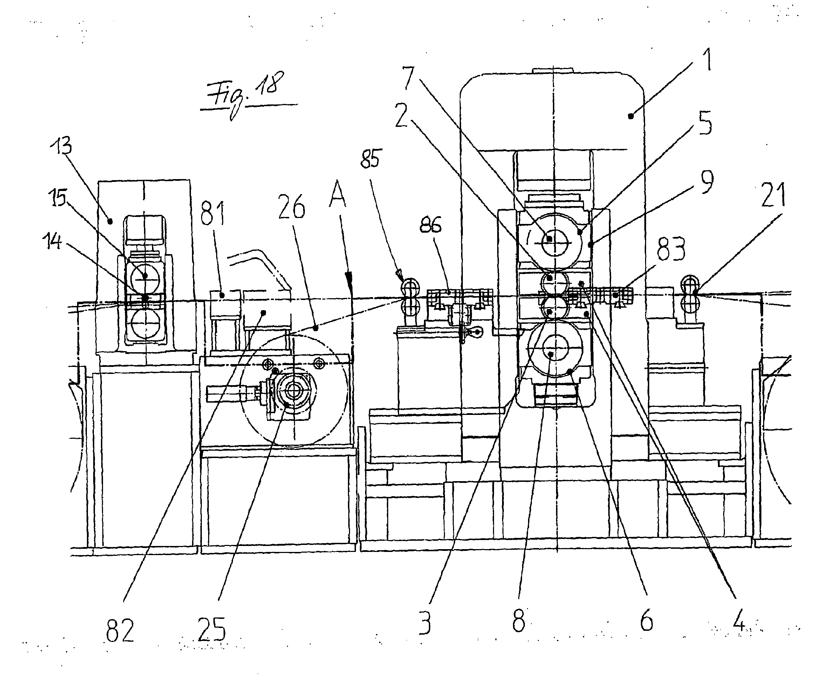

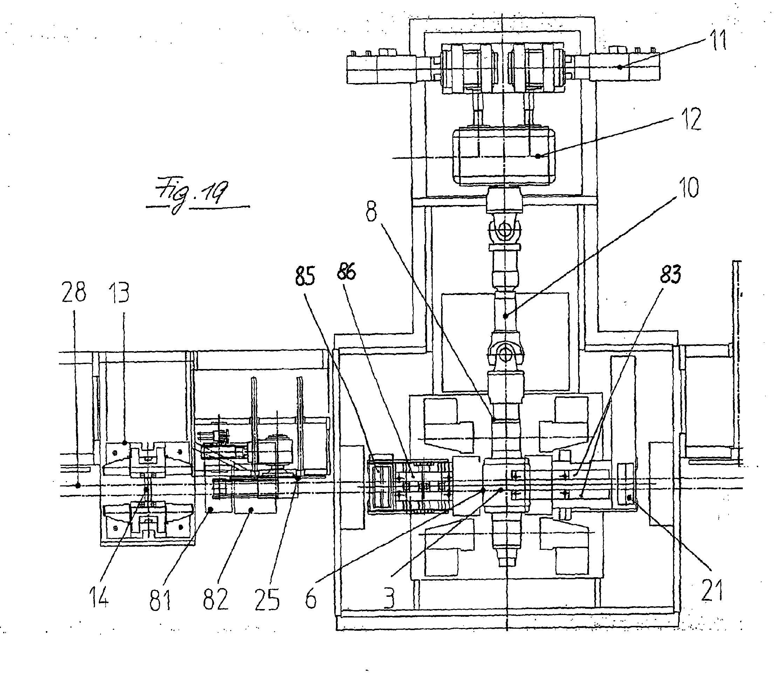

Die in den Figuren 16 bis 21 dargestellten Abwandlungen der in den Figuren 1 und 2 dargestellten Anlage ermöglichen in besonderer Weise, offene Spalte zwischen den Flanken von zwei in dem zusammengesetzten Band vereinten, nebeneinander liegenden Bändern zu vermeiden, zum Beispiel zwischen den Bändern 44 und 46 sowie 45 und 46 in Figur 5.

Die in den Figuren 16 bis 19 dargestellte Anlage hat zusätzlich zu der in den Figuren 1 und 2 dargestellten Anlage zwischen dem Ort der Führungsrollen 21 und dem Walzspalt zwei zu beiden Seiten der Bänderanordnung angeordnete Führungselemente 83, deren gegenseitiger Abstand veränderlich ist und welche beim Walzen den äußeren Flanken der äußeren Bänder der Bänderanordnung anliegen, um zu verhindern, dass die Bänder beim Walzen zur Seite hin ausweichen. An die Auslaufseite des Walzspaltes schließen sich seitliche Führungselemente 86 für das den Walzspalt verlassende zusammenhängende Band an, welche den Führungselementen 83 entsprechen, die auf der Einlaufseite des Walzspaltes angeordnet sind. An die Führungselemente 86 schließen sich zwei waagerecht angeordnete Führungsrollen 85 an, welche den Führungsrollen 21 auf der Einlaufseite des Walzspaltes entsprechen. An die Führungsrollen 85 schließen sich in Walzrichtung R die erste Aufhaspel 25 sowie eine Heizzone 82 und eine Kühlzone 81 an. Daran schließen in Walzrichtung R das Egalisierwalzgerüst 13, die zweite Aufhaspel 27 zum Aufwickeln des herzustellenden zusammengesetzten Bandes 28 sowie die dritte Aufhaspel 29 an.

Wird zum Beispiel die in Figur 5 dargestellte zweite Bänderanordnung gewalzt und bestehen die beiden äußeren Bänder 44 und 45 aus Kupfer und das innere Band 46 aus Manganin, dann sind die beiden Flanken des Manganinbandes 46 dünn, ca. 2 µm bis 3 µm dick, mit einem Lot, zum Beispiel mit Silber, beschichtet.

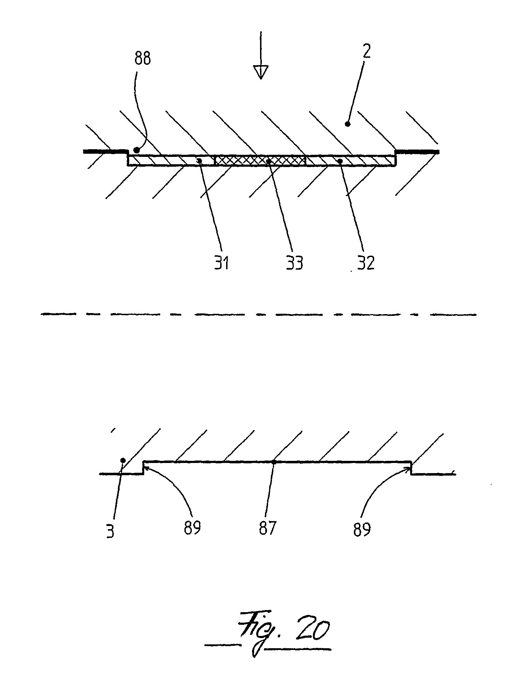

Die Bänderanordnung wird durch den Walzspalt des Walzgerüstes 1 geführt. Auf der Auslaufseite des Walzspaltes des Walzgerüstes 1 wird zunächst das zusätzliche "verlorene" Band 43 von der ersten Bänderanordnung getrennt und durch die Aufhaspel 25 aufgewickelt, welche in diesem Fall den erforderlichen Zug ausübt, um ein Verziehen der gewalzten Bänderanordnung zu vermeiden. Nur die von dem zusätzlichen verlorenen Band 43 befreite, zusammenhängende erste Bänderanordnung 28 wird durch die Heizzone 82 bewegt, in welcher bei höherer Temperatur, weiche auf die an den Flanken zwischen den Bändern 44 und 46 sowie 45 und 46 vorliegende Materialpaarung abgestimmt ist, kurzzeitig eine flüssige Phase erzeugt wird. Anschließend wird das zusammengesetzte Band 28 durch die Kühlzone 81 bewegt. Auf diese Weise wird durch einen Lötvorgang ein fester Verbund zwischen den Flanken der Bänder 44, 45 und 46 hergestellt. Die Aufhaspel 27 arbeitet in diesem Fall nur noch mit einer verhältnismäßig geringen Zugkraft, die ausreicht, um das zusammengesetzte Band 28 glatt aufzuwickeln. Anstelle der Führungselemente 83 und 86, die im Beispiel der Figuren 16 bis 19 dargestellt sind, können für Zwecke der Erfindung zwei besonders ausgebildete Arbeitswalzen 2 und 3 im Walzgerüst 1 verwendet werden. Solche besonderen Arbeitswalzen sind in Figur 20 dargestellt. Die untere Arbeitswalze 3 hat eine im Querschnitt rechteckige Ringnut 87, welche sich in Umfangsrichtung um die untere Arbeitswalze 3 herum erstreckt. Der Ringnut 87 genau gegenüberliegend hat die obere Arbeitswalze 2 einen im Querschnitt nahezu rechteckigen Kragen 88, dessen Breite der lichten Weite der Ringnut 87 eng angepasst ist, so dass der Kragen 88 in die Ringnut 87 eintauchen kann, ohne beim Walzen darin festzufressen. Ein solches Arbeitswalzenpaar eignet sich für das erfindungsgemäße Walzen einer Anordnung aus mehreren Bändern, welche eine mit der lichten Weite der Ringnut 87 übereinstimmende Breite hat. Die Verwendung von Führungselementen 83 und 86, wie sie im Beispiel der Figuren 16 bis 19 dargestellt sind, hat jedoch den Vorteil, dass diese an unterschiedlich breite Bänderahordnungen angepasst und gleichbleibend für dieselben zylindrischen Arbeitswalzen 2 und 3 benutzt werden können.

Figur 20 zeigt eine Abwandlung der in den Figuren 16 bis 19 dargestellten Anlage. Die Abwandlung besteht darin, dass auf der Einlaufseite des Walzgerüstes 1 eine Heizeinrichtung 90 vorgesehen ist, welche die ankommende Bänderanordnung 22 auf dem Weg von den Führungsrollen 21 zu den Arbeitswalzen 2 und 3 beheizt. Im vorliegenden Fall handelt es sich um eine elektrische Heizeinrichtung, welche die Bänder direkt beheizt, und zwar dadurch, dass die Arbeitswalzen 2, 3 mit dem einen Pol einer Gleichstromquelle 91 und die Führungsrollen 21 mit dem anderen Pol der Gleichstromquelle 91 verbunden sind. So schließt sich von dem einen Pol der Gleichstromquelle 91 über eine Leitung 92 zu den Führungsrollen 21, über die Bänderanordnung 22, die Arbeitswalzen 2, 3 sowie über eine von ihnen zu dem anderen Pol der Gleichstromquelle 91 führende Leitung 93 der Stromkreis, welcher die Anordnung 22 von Bändern direkt beheizt. In erwünschter Weise erhält man die höchste Temperatur unmittelbar beim Eintritt der Bänderanordnung 22 in den Walzspalt. Zweckmäßigerweise arbeitet man mit niedriger Spannung und hoher Stromstärke. Die Stromstärke wird so auf das Material der Bänder und auf deren Geschwindigkeit abgestimmt, dass die für eine stoffschlüssige Verbindung der Bänder längs ihrer Flanken erforderliche Temperatur spätestens im Walzspalt erreicht wird.

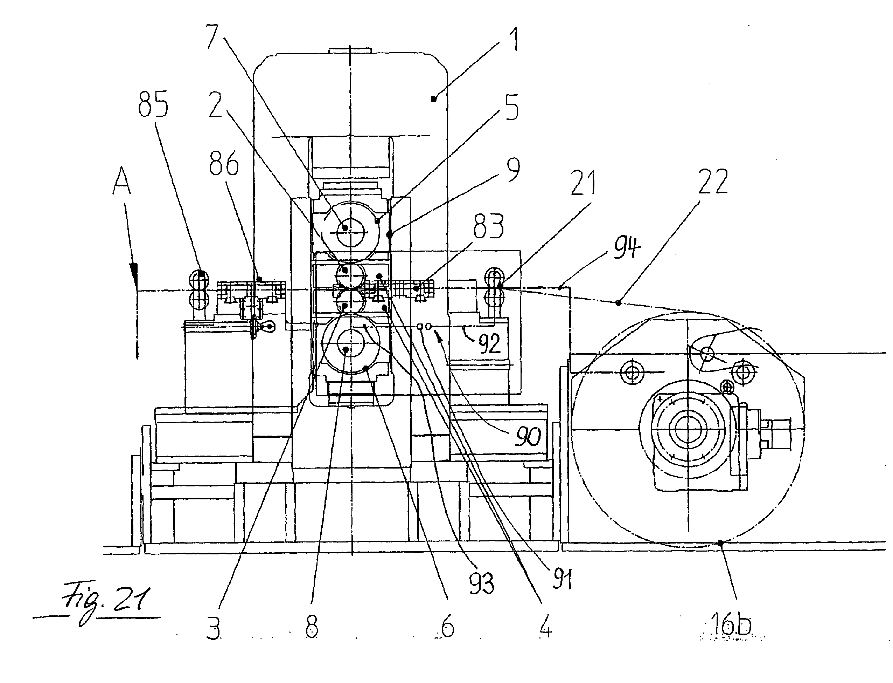

Für den Fall, dass die zu verarbeitenden Bänder bei der erhöhten Temperatur an Luft oxidieren und die Oxidation unerwünscht ist, ist der heiße Bereich gekapselt. In Figur 21 ist deshalb schematisch eine Kammer 94 angedeutet, welche unter Schutzgas gesetzt werden kann.

Die im Ausführungsbeispiel gemäß Figuren 16 bis 19 auf der Auslaufseite des Walzgerüstes 1 vorgesehen Heizzone 82 kann bei der abgewandelten Anlage gemäß Figur 21 entfallen, Die im Ausführungsbeispiel der Figuren 16 bis 19 vorgesehene Kühlzone 81 ist hingegen in der abgewandelten Anlage gemäß Figur 21 zweckmäßigerweise ebenfalls vorhanden.

**Bezugszahlenliste**
- 1.: Walzgerüst
- 2.: Arbeitswalze
- 3.: Arbeitswalze
- 4.: Arbeitslager
- 5.: obere Stützwalze
- 6.: untere Stützwalze
- 7.: Walzenzapfen
- 8.: Walzenzapfen
- 9.: seitliche Einbauteile von 1
- 10.: Kardanwelle
- 11.: Elektromotoren
- 12.: Getriebe
- 13.: Egalisierwalzgerüst
- 14.: Egalisierwalzen
- 15.: Stützwalzen
- 16.: Haspel
- 17.: Haspel
- 18.: Haspel
- 16a.: Ständer
- 17a.: Ständer
- 18a.: Ständer
- 16b.: Coil
- 17b.: Coil
- 18b.: Coil
- 19.: Antrieb
- 20.: Stangen
- 21.: Führungsrollen
- 22.: Lage von Bändern
- 23.: Lage von Bändern

- 24.: Lage von Bändern
- 25.: Aufhaspel
- 26.: Inlayband
- 27.: Aufhaspel
- 28.: herzustellendes Band
- 29.: Aufhaspel
- 30.: Inlayband
- 31.: erstes Band
- 32.: schmaleres Band
- 33.: schmaleres Band
- 34.: schmaleres Band
- 35.: schmaleres Band
- 36.: Längsrand
- 37.: Längsrand
- 38a.: Grenzflächen
- 38b.: Grenzflächen
- 38c.: Grenzflächen
- 39.: Nut
- 40.: zweilagige "zweite Bänderanordnung"
- 41.: Kupferband
- 42.: Kupferband
- 43.: Manganinband
- 44.: Kupferband
- 45.: Kupferband
- 46.: Manganinband
- 47.: Anschlußfahnen
- 48.: Brücke
- 49.: Kontaktbeine
- 50.: dreilagige "zweite Bänderanordnung"
- 51.: Band aus einem ersten Werkstoff
- 52.: Band aus einem ersten Werkstoff

- 53.: Band aus einem anderen Werkstoff
- 54.: Band aus einem ersten Werkstoff
- 55.: Band aus einem ersten Werkstoff
- 56.: schmaleres Band
- 57.: schmaleres Band
- 58.: Hohlraum
- 59.: Schlitz
- 60.: "zweite Bänderanordnung"
- 61.: Band aus dem ersten Werkstoff
- 62.: Band aus einem Edelmetall
- 63.: Band für ein verlorenes Inlay
- 64.: Band aus dem ersten Werkstoff
- 65.: Band für ein verlorenes Inlay
- 66.: Stufenprofilband
- 67.: Stufenprofilband
- 68.:
- 69.:
- 70.: Stufenprofilband
- 71.: Band aus dem ersten Werkstoff
- 72.: Band für ein verlorenes Inlay
- 73.: Band aus dem ersten Werkstoff
- 74.: Band für ein verlorenes Inlay
- 75.: Band aus dem ersten Werkstoff
- 76.: Band aus dem ersten Werkstoff
- 77.: Band für ein verlorenes Inlay
- 78.: Band aus dem ersten Werkstoff
- 79.: Band für ein verlorenes Inlay
- 80.: Trennkörper, Keil
- 81.: Kühlzone
- 82.: Heizzone
- 83.: Führungselemente
- 84.:
- 85.: Führungsrollen
- 86.: Führungselemente
- 87.: Ringnut
- 88.: Kragen
- 89.: Flanken der Ringnut
- 90.: Heizeinrichtung
- 91.: Gleichstromquelle
- 92.: Leitung
- 93.: Leitung

- A:: Stelle für keilförmigen Trennkörper
- B:: Stelle für keilförmigen Trennkörper
- R:: Walzrichtung

## Patentansprüche

1. Verfahren zum Herstellen eines Bandes, welches eine durch seine zwei Längsränder bestimmte Breite hat, aus mindestens einem ersten metallischen oder überwiegend metallischen Werkstoff zusammengesetzt ist und der Bereich des Bandes, über den sich der erste Werkstoff erstreckt, eine Grenzfläche (38a, 38b, 38c) aufweist, welche im Querschnitt des Bandes stufenförmig zwischen den beiden Längsrändern (36, 37) des Bandes verläuft,
**dadurch gekennzeichnet, dass**
(a) unterschiedlich breite Bänder (31, 32, 34), welche den ersten Werkstoff enthalten und welche selbst keine stufenförmige Grenzfläche zwischen ihren beiden Längsrändern haben, erst in einem Walzspalt oder vor einem Walzspalt zu einer ersten Bänderanordnung mit einer stufenförmigen Grenzfläche zusammengeführt werden,
(b) dass die erste Bänderanordnung durch eines oder mehrere weitere Bänder (33, 35) erst in dem Walzspalt oder vor dem Walzspalt zu einer im Querschnitt rechteckigen zweiten Bänderanordnung ergänzt wird und
(c) durch Walzen der zweiten Bänderanordnung wenigstens die Bänder (31, 32, 34) der ersten Bänderanordnung miteinander verbunden werden.

2. Verfahren nach Anspruch 1, **dadurch gekennzeichnet, dass** die Schritte (a) und (b) gleichzeitig durchgeführt werden.

3. Verfahren nach Anspruch 1 oder 2, **dadurch gekennzeichnet, dass** für das Walzen zwei zylindrische Arbeitswalzen (2, 3) verwendet werden, welche den Walzspalt begrenzen, und dass die einzelnen Bänder (31 bis 35), aus denen die zweite Bänderanordnung gebildet wird, kurz vor dem Walzspalt zusammengeführt werden.

4. Verfahren nach einem der Ansprüche 1 bis 3, **dadurch gekennzeichnet, dass** das Walzen als Kaltwalzplattieren durchgeführt wird.

5. Verfahren nach einem der Ansprüche 1 bis 3, **dadurch gekennzeichnet, dass** das Walzen als Warmwalzplattieren durchgeführt wird.

6. Verfahren nach Anspruch 4 oder 5, **dadurch gekennzeichnet, dass** das Band nach dem Walzplattieren durch einen weiteren Walzvorgang egalisiert wird.

7. Verfahren nach Anspruch 6, **dadurch gekennzeichnet, dass** das Band erst nach dem Egalisieren aufgewickelt wird.

8. Verfahren nach Anspruch 6 oder 7, **dadurch gekennzeichnet, dass** das Band zwischen zwei den Arbeitswalzen (2, 3) nachgeordneten Egalisierwalzen (14) egalisiert wird.

9. Verfahren nach einem der vorstehenden Ansprüche, **dadurch gekennzeichnet, dass** zwischen den Bändern (31, 32, 34) der ersten Bänderanordnung, soweit sie sich nicht unmittelbar durch Walzen miteinander verbinden lassen, eine die Bindung vermittelnde Zwischenschicht angeordnet wird,

10. Verfahren nach Anspruch 9, **dadurch gekennzeichnet, dass** zur Bildung der Zwischenschicht ein gesondertes Band in die erste Bänderanordnung eingeführt wird.

11. Verfahren nach Anspruch 9, **dadurch gekennzeichnet, dass** die Zwischenschicht auf eines oder mehrere der Bänder (32, 34), welche die erste Bänderanordnung bilden, plattiert wird, bevor diese zur ersten Bänderanordnung zusammengeführt werden.

12. Verfahren nach Anspruch 11, **dadurch gekennzeichnet, dass** die Zwischenschicht auf eines oder mehrere der Bänder (32, 34), welche die erste Bänderanordnung bilden, galvanisch abgeschieden wird.

13. Verfahren nach einem der Ansprüche 9 bis 12, **dadurch gekennzeichnet, dass** die Zwischenschicht dünner gewählt wird als die Bänder (31, 32, 34), welche sie verbinden soll.

14. Verfahren nach einem der Ansprüche 9 bis 12, **dadurch gekennzeichnet, dass** die Zwischenschicht sehr viel dünner gewählt wird als die Bänder (31, 32, 34), welche sie verbinden soll.

15. Verfahren nach Anspruch 12, **dadurch gekennzeichnet, dass** das die Zwischenschicht höchstens 10 µm dick abgeschieden wird.

16. Verfahren nach Anspruch 12, **dadurch gekennzeichnet, dass** die Zwischenschicht höchstens 5 µm dick abgeschieden wird.

17. Verfahren nach einem der vorstehenden Ansprüche, **dadurch gekennzeichnet, dass** der Werkstoff eines, mehrerer oder aller weiteren Bänder (26, 30, 33, 35), welche die erste Bänderanordnung zu der zweiten Bänderanordnung ergänzen, so gewählt ist, dass er sich nicht oder nur wesentlich schwächer
als es die Bänder (31, 32, 34) der ersten Bänderanordnung tun, durch das Walzen mit den Bändern der ersten Bänderanordnung verbindet und dass diese weiteren Bänder (26, 30, 33, 35), deren Werkstoff in der genannten Weise gewählt ist, nach dem Walzen der zweiten Bänderanordnung aus dieser wieder entfernt werden.

18. Verfahren nach Anspruch 17, **dadurch gekennzeichnet, dass** hinter dem Walzspalt die zu entfernenden weiteren Bänder (26, 30, 33, 35) in eine andere Richtung gezogen werden als das durch das Walzplattieren fester zusammenhängende und die erste Bänderanordnung enthaltende zusammengesetzte Band, welches herzustellen war, und dass die zu entfernenden weiteren Bänder (26, 30, 33, 35) auf diese Weise aus der gewalzten zweiten Bänderanordnung entfernt werden.

19. Verfahren nach Anspruch 18, **dadurch gekennzeichnet, dass** an der Stelle (A, B), an welcher sich die zu entfernenden weiteren Bänder (26, 30) von dem zusammengesetzten, fester zusammenhängenden Band (28) trennen, zwischen diesem zusammengesetzten Band (28) und dem einen oder den mehreren zu entfernenden weiteren Bändern (26, 30) Führungsflächen vorgesehen sind, welche eine Führung der Bänder in die jeweilige Zugrichtung unterstützen.

20. Verfahren nach Anspruch 19, **dadurch gekennzeichnet, dass** die Führungsflächen einen oder mehrere Keile (80) bilden.

21. Verfahren nach einem der Ansprüche 6 bis 8 in Verbindung mit einem der Ansprüche 17 bis 20, **dadurch gekennzeichnet, dass** das Egalisieren durchgeführt wird, nachdem wenigstens eines der weiteren Bänder (26) von der gewalzten zweiten Bänderanordnung entfernt worden ist.

22. Verfahren nach einem der Ansprüche 6 bis 8 in Verbindung mit einem der Ansprüche 17 bis 20, **dadurch gekennzeichnet, dass** das Egalisieren durchgeführt wird, nachdem alle weiteren Bänder von der gewalzten zweiten Bänderanordnung entfernt worden sind.

23. Verfahren nach einem der Ansprüche 1 bis 16, **dadurch gekennzeichnet, dass** der Werkstoff des oder der weiteren Bänder (33, 35) verschieden von dem ersten Werkstoff gewählt ist und alle Bänder (31 bis 35) der zweiten Bänderanordnung durch das Walzen miteinander verbunden werden.

24. Verfahren nach einem der vorstehenden Ansprüche, **dadurch gekennzeichnet, dass** Bänder verwendet werden, die, abgesehen von einer aufplattierten, verglichen mit der Dicke des betreffenden Bandes dünnen und beim Walzen die Bindung herstellenden Schicht, vollständig aus nur einem Werkstoff bestehen.

25. Verfahren nach Anspruch 24, **dadurch gekennzeichnet, dass** Bänder aus einem homogenen Werkstoff verwendet werden.

26. Verfahren nach einem der vorstehenden Ansprüche, **dadurch gekennzeichnet, dass** das Band nach dem Walzen einer Wärmebehandlung unterzogen wird.

27. Verfahren nach einem der vorstehenden Ansprüche, **dadurch gekennzeichnet, dass** die erste Bänderanordnung wenigstens zwei Bänder (44, 46; 45,46) hat, welche nebeneinander und parallel zueinander so angeordnet sind, dass sich ihre einander zugewandten Flanken berühren,
dass die stoffliche Beschaffenheit der miteinander zu verbindenden Flanken so festgelegt wird, dass sie sich durch Erhitzen der einander berührenden Flanken stoffschlüssig miteinander verbinden lassen,
und dass die wenigstens zwei Bänder (44, 46; 45, 46) wenigstens im Bereich ihrer einander berührenden Flanken auf eine solche Temperatur erhitzt werden, bei welcher sich diese Flanken dann unmittelbar stoffschlüssig miteinander verbinden.

28. Verfahren nach Anspruch 27, **dadurch gekennzeichnet, dass** die zweite Bänderanordnung beim Walzen so geführt wird, dass ihre Bänder im Walzspalt nicht zur Seite hin ausweichen können,

29. Verfahren nach Anspruch 27 oder 28, **dadurch gekennzeichnet, dass** die stoffliche Beschaffenheit der miteinander zu verbindenden Flanken unterschiedlich so gewählt wird, dass sich beim Erhitzen der einander berührenden Flanken eine Legierung bildet, deren Schmelzpunkt niedriger ist als der Schmelzpunkt der paarweise an den Flanken miteinander zu verbindenden Bänder (44, 46; 45, 46).

30. Verfahren nach Anspruch 27 oder 28, **dadurch gekennzeichnet, dass** wenigstens eines der paarweise an den Flanken miteinander zu verbindenden Bänder (44, 46; 45, 46) wenigstens an der betreffenden Flanke mit einem Lot beschichtet wird.

31. Verfahren nach Anspruch 30, **dadurch gekennzeichnet, dass** das wenigstens eine der beiden Bänder (44, 46; 45, 46) nur an der betreffenden Flanke mit dem Lot beschichtet wird.

32. Verfahren nach Anspruch 30 oder 31, **dadurch gekennzeichnet, dass** das wenigstens eine Band (44, 45) an seiner betreffenden Flanke mit einem ersten Metall und das andere Band (46) an seiner betreffenden Flanke mit einem zweiten Metall beschichtet wird und diese Metalle infolge des Erhitzens die niedriger schmelzende Legierung bilden.

33. Verfahren nach einem der Ansprüche 30 bis 32, **dadurch gekennzeichnet, dass** die betreffende Flanke durch ein galvanisches Verfahren beschichtet wird.

34. Verfahren nach einem der Ansprüche 27 bis 33, **dadurch gekennzeichnet, dass** die Bänder (44, 46; 45, 46) im Walzspalt mit ihren einander zugewandten Flanken gegeneinander gedrückt werden.

35. Verfahren nach einem der vorstehenden Ansprüche, **dadurch gekennzeichnet, dass** mit einer Stichabnahme von mindestens 50 % gewalzt wird.

36. Verfahren nach Anspruch 35, **dadurch gekennzeichnet, dass** mit einer Stichabnahme von 60 % bis 80 % gewalzt wird.

37. Verfahren nach einem der Ansprüche 26 bis 34, **dadurch gekennzeichnet, dass** die Bänder (44, 46; 45, 46) bzw. die erste oder zweite Bänderanordnung nach dem Walzen auf die Temperatur erhitzt werden, bei welcher sich die Flanken stoffschlüssig miteinander verbinden.

38. Verfahren nach Anspruch 37, **dadurch gekennzeichnet, dass** die erste Bänderanordnung nach dem Walzen zusammenhängend aufgewickelt und danach erhitzt wird.

39. Verfahren nach Anspruch 37, **dadurch gekennzeichnet, dass** die Bänder (44, 46; 45, 46) bzw. die erste oder zweite Bänderanordnung sofort nach dem Walzen erhitzt werden.

40. Verfahren nach Anspruch 39, **dadurch gekennzeichnet, dass** die Bänder (44, 46; 45, 46) bzw. die erste oder zweite Bänderanordnung mit der Geschwindigkeit, mit welcher sie den Walzspalt verlassen, eine Heizzone durchlaufen.

41. Verfahren nach einem der Ansprüche 27 bis 34, **dadurch gekennzeichnet, dass** die Bänder (44, 46; 45, 46) in der ersten oder zweiten Bänderanordnung vor dem Walzen auf die Temperatur erhitzt werden, bei welcher sich die Flanken stoffschlüssig miteinander verbinden.

42. Verfahren nach Anspruch 41, **dadurch gekennzeichnet, dass** die Bänder (44, 46; 45, 46) in der zweiten Bänderanordnung unmittelbar vor dem Walzen erhitzt und dann heiß gewalzt werden.

43. Verfahren nach Anspruch 41 oder 42, **dadurch gekennzeichnet, dass** die erste und die zweite Bänderanordnung schon in der Zone, wo sie erhitzt werden, so geführt werden, dass ihre Bänder nicht zur Seite hin ausweichen können.

44. Verfahren, in welchem eines oder mehrere der nach einem der Ansprüche 1 bis 25 hergestellten Bänder erneut in einem Verfahren nach einem der Ansprüche 1 bis 25 zur Herstellung eines komplexeren Bandes eingesetzt werden.

## Claims

1. Method for producing a strip the width of which is defined by the two longitudinal edges thereof, which is made of at least one first metallic or predominantly metallic material, and in which the region, across which the first material extends, is provided with a boundary area (38a, 38b, 38c) that extends in staggered manner between the two longitudinal edges (36, 37) over the cross-section of the strip,
**characterized by** the steps of
(a) combining strips (31, 32, 34) of different widths, which contain the first material and which as such do not comprise a staggered boundary area between their two longitudinal edges, only in a nip or before a nip to form a first arrangement of strips having a staggered boundary area;
(b) complementing the first arrangement of strips by one or more additional strips (33, 35) only in the nip or before the nip to form a second arrangement of strips having a rectangular cross-section; and
(c) bonding at least the strips (31, 32, 34) of the first arrangement of strips to each other by rolling.

2. The method as defined in Claim 1, **characterized in that** the steps (a) and (b) are carried out simultaneously.

3. The method as defined in Claim 1 or Claim 2, **characterized in that** two cylindrical working rolls (2,3) are used for rolling, which define between them the nip, and that the different strips (31 to 35) from which the second arrangement of strips is formed are united shortly before the nip.

4. The method as defined in any of Claims 1 to 3, **characterized in that** rolling is carried out as a cold-roll plating operation.

5. The method as defined in any of Claims 1 to 3, **characterized in that** rolling is carried out as a hot-roll plating operation.

6. The method as defined in Claim 4 or Claim 5, **characterized in that** the strip is equalized by an additional rolling operation after the roll-plating process.

7. The method as defined in Claim 6, **characterized in that** the strip is wound up only after the equalization process.

8. The method as defined in Claim 6 or Claim 7, **characterized in that** the strip is equalized between two equalizing rolls (14) arranged downstream of the working rolls (2, 3).

9. The method as defined in any of the preceding claims, **characterized in that** an intermediate layer, acting as intermediary in the bonding process, is arranged between the strips (31, 32, 34) of the first arrangement of strips if and to the extent these cannot be bonded immediately by rolling.

10. The method as defined in Claim 9, **characterized in that** a separate strip is introduced into the first arrangement of strips for forming the intermediate layer.

11. The method as defined in Claim 9, **characterized in that** the intermediate layer is bonded onto one or more of the strips (32, 34) that form the first arrangement of strips, before they are united to form the first arrangement of strips.

12. The method as defined in Claim 11, **characterized in that** the intermediate layer is galvanically separated onto one or more of the strips (32, 34) that form the first arrangement of strips.

13. The method as defined in any of Claims 9 to 12, **characterized in that** the intermediate layer is selected to be thinner than the strips (31, 32, 34) that are to be connected by it.

14. The method as defined in any of Claims 9 to 12, **characterized in that** the intermediate layer is selected to be very much thinner than the strips (31, 32, 34) that are to be connected by it.

15. The method as defined in Claim 12, **characterized in that** the intermediate layer is applied by separation in a thickness of 10 µm maximally.

16. The method as defined in Claim 12, **characterized in that** intermediate layer is applied by separation in a thickness of 5 µm maximally.

17. The method as defined in any of the preceding claims, **characterized in that** the material of one, more of all additional strips (26, 30, 33, 35) that complement the first arrangement of strips to form the second arrangement of strips is selected to ensure that it will form no or only a considerably weaker bond with the strips of the first arrangement of strips by the rolling operation than the strips (31, 32, 34), and that these additional strips (26, 30, 33, 35), whose material is selected in the described way, is removed from the second arrangement of strips after the rolling process.

18. The method as defined in Claim 17, **characterized in that** following the nip, the additional strips (26, 30, 33, 35) to be removed are pulled in a different direction than the composite strip to be produced, showing the stronger bond and contained the first arrangement of strips, and that the additional strips (26, 30, 33, 35) to be removed are removed in this way from the rolled second arrangement of strips.

19. The method as defined in Claim 18, **characterized in that** at the point (A, B) where the additional strips (26, 30) to be removed separate from the composite strip (28) showing the stronger bond, guide surfaces are provided between that composite strip (28) and the one or more strips (26, 30) to be removed, which support the guiding effect that moves the strips in the respective direction of tension.

20. The method as defined in Claim 19, **characterized in that** the guiding surfaces form one or more wedges (80).

21. The method as defined in any of Claims 6 to 8, in conjunction with any of Claims 17 to 20, **characterized in that** the equalizing process is carried out after at least one of the additional strips (26) has been removed from the rolled second arrangement of strips.

22. The method as defined in any of Claims 6 to 8, in conjunction with any of Claims 17 to 20, **characterized in that** the equalizing process is carried out after all additional strips have been removed from the rolled second arrangement of strips.

23. The method as defined in any of Claims 1 to 16, **characterized in that** the material of the one or of the additional strips (33, 35) is selected to be different from the first material and that all strips (31 to 35) of the second arrangement of strips are bonded together by the rolling process.

24. The method as defined in any of the preceding claims, **characterized in that** the strips used are strips which, apart from a plated layer which is thin compared with the thickness of the respective strip and which is to produce the bond during the rolling process, consist of a single material in their entirety.

25. The method as defined in Claim 24, **characterized in that** strips consisting of a homogenous material are used.

26. The method as defined in any of the preceding claims, **characterized in that** the strip is subjected to a heat-treatment after the rolling operation.

27. The method as defined in any of the preceding claims, **characterized in that** the first arrangement of strips comprises at least two strips (44, 46; 45, 46) arranged one beside and in parallel to each other so that their neighboring flanks are in contact with each other,
that the material properties of the flanks to be connected are determined in such a way that the contacting flanks can be caused by heating to form a material bond,
and that the at least two strips (44, 46; 45,46) are heated, at least in the are of their contacting flanks, to a temperature at which those flanks will then immediately form a material bond one with the other.

28. The method as defined in Claim 27, **characterized in that** the second arrangement of strips is guided during the rolling operation so that its strips are prevented from moving to the side in the nip.

29. The method as defined in Claim 27 or Claim 28, **characterized in that** the material properties of the flanks to be bonded one to the other are selected to be different so that, when the contacting flanks are heated, an alloy will form whose melting point is lower than the melting point of the strips (44, 46; 45,46) to be connected in pairs at their flanks.

30. The method as defined in Claim 27 or Claim 28, **characterized in that** at least one of the strips (44, 46; 45, 46) to be connected in pairs at their flanks has the respective flank coated with a solder.

31. The method as defined in Claim 30, **characterized in that** at least one of the two strips (44, 46; 45, 46) is coated with the solder only on the respective flank.

32. The method as defined in Claim 30 or Claim 31, **characterized in that** the at least one strip (44, 45) is coated on its respective flank with a first metal, and the other strip (46) is coated on its respective flank with a second metal and that as a result of the heating process these metals form the lower melting point alloy.

33. The method as defined in any of Claims 30 to 32, **characterized in that** the respective flank is coated using a galvanic process.

34. The method as defined in any of Claims 27 to 33, **characterized in that** the strips (44, 46; 45 46) are pressed together by their flanks facing each other in the nip.

35. The method as defined in any of the preceding claims, **characterized in that** the rolling process is carried out using a reduction per pass of 50 %.

36. The method as defined in Claim 35, **characterized in that** the rolling process is carried out using a reduction per pass of 60 % to 80 %.

37. The method as defined in any of Claims 26 to 34, **characterized in that** the strips (44, 46; 45, 46) and/or the first or the second arrangement of strips are heated up after rolling to the temperature at which the flanks will be connected by a material bond.

38. The method as defined in Claim 37, **characterized in that** the first arrangement of strips is wound up continuously after rolling and is then heated.

39. The method as defined in Claim 37, **characterized in that** the strips (44, 46; 45, 46) and/or the first or the second arrangement of strips are heated immediately after rolling.

40. The method as defined in Claim 39, **characterized in that** the strips (44, 46; 45, 46) and/or the first or the second arrangement of strips are passed through a heating zone at the same speed at which they leave the nip.

41. The method as defined in any of Claims 27 to 34, , **characterized in that** the strips (44, 46; 45, 46) in the first or the second arrangement of strips are heated up before the rolling operation to the temperature at which their flanks will form a material bond between them.

42. The method as defined in Claim 41, **characterized in that** the strips (44, 46; 45, 46) in the second arrangement of strips are heated immediately before rolling and are then rolled in hot condition.

43. The method as defined in Claim 41 or Claim 42, **characterized in that** the first and the second arrangement of strips are guided already in the zone where they are heated so that their strips will not more to the side.

44. Method in which one or more of the strips produced according to any one of Claims 1 to 25 are used once more in a method according to any of Claims 1 to 25 for producing a more complex strip.

## Revendications

1. Procédé pour la fabrication d'un feuillard qui possède une largeur déterminée par ses deux bords longitudinaux, qui est composé d'au moins un premier matériau métallique ou principalement métallique, la zone du feuillard sur laquelle s'étend le premier matériau présentant une surface de séparation (38a, 38b, 38c) qui prend une configuration en gradins dans la section transversale du feuillard entre les deux bords longitudinaux (36, 37),
**caractérisé**
(a) **en ce qu**'on réunit dans un premier temps des feuillards possédant des largeurs différentes (31, 32, 34), qui contiennent le premier matériau et qui ne possèdent en soi aucune surface de séparation en gradins entre leurs deux bords longitudinaux, dans un calibre plat ou devant un calibre plat pour obtenir un premier agencement de feuillards possédant une surface de séparation en gradins ;
(b) en ce qu'on ajoute dans un premier temps au premier agencement de feuillards, un ou plusieurs feuillards supplémentaires (33, 35), dans le calibre plat ou bien avant le calibre plat pour obtenir un deuxième agencement de feuillards possédant une section transversale rectangulaire ; et
(c) en ce qu'on relie, par laminage du deuxième agencement de feuillards, les uns aux autres au moins les feuillards (31, 32, 34) du premier agencement de feuillards.

2. Procédé selon la revendication 1, **caractérisé en ce qu'**on effectue les étapes (a) et (b) de manière simultanée.

3. Procédé selon la revendication 1 ou 2, **caractérisé en ce qu'**on utilise, pour le laminage, deux rouleaux de travail cylindriques (2, 3) qui délimitent le calibre plat, et **en ce qu'**on réunit les feuillards individuels (31 à 35) qui forment le deuxième agencement de feuillards, juste avant le calibre plat.

4. Procédé selon l'une quelconque des revendications 1 à 3, **caractérisé en ce qu'**on effectue le laminage sous la forme d'un placage à froid.

5. Procédé selon l'une quelconque des revendications 1 à 3, **caractérisé en ce qu'**on effectue le laminage sous la forme d'un placage à chaud.

6. Procédé selon la revendication 4 ou 5, **caractérisé en ce qu'**on égalise le feuillard après le placage via un processus de laminage supplémentaire.

7. Procédé selon la revendication 6, **caractérisé en ce qu'**on enroule le feuillard seulement après l'égalisation.

8. Procédé selon la revendication 6 ou 7, **caractérisé en ce qu'**on égalise le feuillard entre deux cylindres d'égalisation montés à la suite des cylindres de travail (2, 3).

9. Procédé selon l'une quelconque des revendications précédentes, **caractérisé en ce qu'**on dispose, entre les feuillards (31, 32, 34) du premier agencement de feuillards, dans la mesure où l'on ne peut les relier les uns aux autres directement par laminage, une couche intermédiaire pour la transmission de la liaison.

10. Procédé selon la revendication 9, **caractérisé en ce que**, pour la formation de la couche intermédiaire, on introduit un feuillard séparé dans le premier agencement de feuillards.

11. Procédé selon la revendication 9, **caractérisé en ce qu'**on applique la couche intermédiaire par placage sur un ou plusieurs feuillards (32, 34) qui forment le premier agencement de feuillards, avant de réunir ces derniers pour l'obtention du premier agencement de feuillards.

12. Procédé selon la revendication 11, **caractérisé en ce qu'**on procède à une électrodéposition de la couche intermédiaire sur un ou plusieurs feuillards (32, 34) qui forment le premier agencement de feuillards.

13. Procédé selon l'une quelconque des revendications 9 à 12, **caractérisé en ce qu'**on sélectionne une couche intermédiaire plus mince que les feuillards (31, 32, 34) qu'elle doit relier.

14. Procédé selon l'une quelconque des revendications 9 à 12, **caractérisé en ce qu'**on sélectionne une couche intermédiaire beaucoup plus mince que les feuillards (31, 32, 34) qu'elle doit relier.

15. Procédé selon la revendication 12, **caractérisé en ce qu'**on dépose la couche intermédiaire avec une épaisseur maximale de 10 µm.

16. Procédé selon la revendication 12, **caractérisé en ce qu'**on dépose la couche intermédiaire avec une épaisseur maximale de 5 µm.

17. Procédé selon l'une quelconque des revendications précédentes, **caractérisé en ce qu'**on sélectionne le matériau d'un feuillard supplémentaire, de plusieurs feuillards supplémentaires ou de tous les feuillards supplémentaires (26, 30, 33, 35) que l'on ajoute au premier agencement de feuillards via le laminage pour obtenir le deuxième agencement de feuillards, de telle sorte qu'il ne se lie pas aux feuillards du premier agencement de feuillards ou de telle sorte qu'il s'y lie seulement de manière essentiellement plus faible que les feuillards (31, 32, 34) du premier agencement de feuillards et de telle sorte que les feuillards supplémentaires (26, 30, 33, 35) dont le matériau est sélectionné de la manière indiquée, après le laminage du deuxième agencement de feuillards, sont retirés de ce dernier.

18. Procédé selon la revendication 17, **caractérisé en ce que**, derrière le calibre plat, les feuillards supplémentaires à éloigner (26, 30, 33, 35) sont tirés dans un autre direction que celle du feuillard composite plus fermement lié via le placage et contenant le premier agencement de
feuillards, qui devait être fabriqué, et **en ce que** les feuillards supplémentaires à éloigner (26, 30, 33, 35) sont ainsi éloignés du deuxième agencement de feuillards laminés.

19. Procédé selon la revendication 18, **caractérisé en ce qu'**on prévoit, à l'endroit (A, B) auquel les feuillards supplémentaires à éloigner (26, 30) se sépare du feuillard composite plus fermement lié (28), entre ce feuillard composite (28) et ledit ou lesdits plusieurs feuillards supplémentaires à éloigner (26, 30), des surfaces de guidage qui facilitent un guidage des feuillards dans la direction de traction respective.

20. Procédé selon la revendication 19, **caractérisé en ce que** les surfaces de guidage forment un ou plusieurs coins (80).

21. Procédé selon l'une quelconque des revendications 6 à 8 en liaison avec l'une quelconque des revendications 17 à 20, **caractérisé en ce qu'**on effectue l'égalisation après avoir éloigné au moins un des feuillards supplémentaires (26) du deuxième agencement de feuillards laminés.

22. Procédé selon l'une quelconque des revendications 6 à 8 en liaison avec l'une quelconque des revendications 17 à 20, **caractérisé en ce qu'**on effectue l'égalisation après avoir éloigné tous les feuillards supplémentaires (26) du deuxième agencement de feuillards laminés.

23. Procédé selon l'une quelconque des revendications 1 à 16, **caractérisé en ce que** le matériau dudit ou desdits feuillards supplémentaire (33, 35) est choisi pour être différent du premier matériau, tous les feuillards (31 à 35) du deuxième agencement de feuillards étant liés les uns aux autres par laminage.

24. Procédé selon l'une quelconque des revendications précédentes, **caractérisé en ce qu'**on utilise des feuillards qui, indépendamment d'une couche appliquée par placage, mince par comparaison à l'épaisseur du feuillard concerné et qui est là pour l'obtention de la liaison lors du laminage, sont constitués dans leur totalité d'un seul matériau.

25. Procédé selon la revendication 24, **caractérisé en ce qu'**on utilise des feuillards constitués d'un matériau homogène.

26. Procédé selon l'une quelconque des revendications précédentes, **caractérisé en ce qu'**on soumet le feuillard, après le laminage, à un traitement thermique.

27. Procédé selon l'une quelconque des revendications précédentes, **caractérisé en ce que** le premier agencement de feuillards possède au moins deux feuillards (44, 46 ; 45, 46) qui sont disposés l'un à côté de l'autre et parallèlement l'un à l'autre de telle sorte que leurs flancs tournés l'une vers l'autre se touchent, **en ce que** la qualité matérielle des flancs à relier les uns aux autres est déterminée de telle sorte que l'on puisse les relier les uns aux autres par liaison de matière lorsqu'on chauffe les flancs qui se
touchent mutuellement, et **en ce que** lesdits au moins deux feuillards (44, 46 ; 45, 46) sont chauffés, au moins dans la zone de leurs flancs qui se touchent mutuellement, à une température à laquelle ces flancs peuvent se lier l'un à l'autre directement par liaison de matière.

28. Procédé selon la revendication 27, **caractérisé en ce que** le deuxième agencement de feuillards est guidé, lors du laminage, de telle sorte que ses feuillards ne peuvent être soumis à un déplacement en direction dans le calibre plat.

29. Procédé selon la revendication 27 ou 28, **caractérisé en ce que** la qualité matérielle des flancs à relier les uns aux autres est sélectionnée de telle sorte que, lors du chauffage des flancs qui se touchent mutuellement, on obtient un alliage dont le point de fusion est inférieur au point de fusion des feuillards (44, 46 ; 45, 46) qui doivent être reliés l'un à l'autre à leurs flancs par paires.

30. Procédé selon la revendication 27 ou 28, **caractérisé en ce qu'**on enduit au moins un des feuillards (44, 46 ; 45, 46) à relier l'un à l'autre à leurs flancs par paires avec une matière d'apport de brasage au moins au flanc concerné.

31. Procédé selon la revendication 30, **caractérisé en ce que** ledit au moins un feuillard parmi les deux feuillards (44, 46 ; 45, 46) n'est enduit avec la matière d'apport de brasage qu'au flanc correspondant.

32. Procédé selon la revendication 30 ou 31, **caractérisé en ce que** ledit au moins un feuillard (44, 45) est enduit avec un premier métal à son flanc correspondant et l'autre feuillard (46) est enduit sur son flanc correspondant avec un deuxième métal, ces métaux formant, suite au chauffage, l'alliage à point de fusion inférieur.

33. Procédé selon l'une quelconque des revendications 30 à 32, **caractérisé en ce que** le flanc correspondant est enduit via un procédé galvanique.

34. Procédé selon l'une quelconque des revendications 27 à 33 **caractérisé en ce que** les feuillards (44, 46 ; 45, 46) sont pressés l'un contre l'autre avec leur flancs tournés l'un vers l'autre, dans le calibre plat.

35. Procédé selon l'une quelconque des revendications précédentes, **caractérisé en ce qu'**on effectue le laminage avec une réduction d'épaisseur aux différentes passes d'au moins 50 %.

36. Procédé selon la revendication 35, **caractérisé en ce qu'**on effectue le laminage avec une réduction d'épaisseur aux différentes passes de 60 % à 80 %.

37. Procédé selon l'une quelconque des revendications 26 à 34 **caractérisé en ce que** les feuillards (44, 46 ; 45, 46), respectivement le premier ou le deuxième agencement de feuillards sont chauffés après le laminage à la température à laquelle les flancs sont liés l'un à l'autre par liaison de matière.

38. Procédé selon la revendication 37, **caractérisé en ce que** le premier agencement de feuillards est enroulé à l'état lié après le laminage, avant d'être chauffé.

39. Procédé selon la revendication 37, **caractérisé en ce que** les feuillards (44, 46 ; 45, 46), respectivement le premier ou le deuxième agencement de feuillards sont chauffés directement après le laminage.

40. Procédé selon la revendication 37, **caractérisé en ce que** les feuillards (44, 46 ; 45, 46), respectivement le premier ou le deuxième agencement de feuillards passent par une zone de chauffage à la vitesse à laquelle ils quittent le calibre plat.

41. Procédé selon l'une quelconque des revendications 27 à 34 **caractérisé en ce que** les feuillards (44, 46 ; 45, 46) dans le premier ou le deuxième agencement de feuillards sont chauffés avant le laminage à la température à laquelle les flancs sont liés l'un à l'autre par liaison de matière.

42. Procédé selon la revendication 41, **caractérisé en ce que** les feuillards (44, 46 ; 45, 46) dans le deuxième agencement de feuillards sont chauffés avant le laminage avant d'être soumis à un laminage à chaud.

43. Procédé selon la revendication 41 ou 42, **caractérisé en ce que** le premier et le deuxième agencement de feuillards sont guidés, déjà dans la zone dans laquelle ils sont chauffés, de telle sorte que leurs feuillards ne être soumis à un déplacement en direction latérale.

44. Procédé, dans lequel on met à nouveau en oeuvre un ou plusieurs feuillards fabriqués conformément à l'une quelconque des revendications 1 à 25 dans un procédé selon l'une quelconque des revendications 1 à 25 pour la fabrication d'un feuillard plus complexe.
